# EUROPEAN PATENT SPECIFICATION

(11) **EP 4 672 060 B1**
(45) Date of publication and mention of the grant of the patent: **21.10.2026**
(21) Application number: 24822330.7
(22) Date of filing: 21.03.2024
(51) Int. Cl.: G06F 21/62, G06F 21/60, G06Q 10/1093, G06F 3/04817

(54) **PERMISSION MANAGEMENT METHOD, GRAPHICAL INTERFACE AND RELATED APPARATUS**
ERLAUBNISVERWALTUNGSVERFAHREN, GRAFISCHE SCHNITTSTELLE UND ZUGEHÖRIGE VORRICHTUNG
PROCÉDÉ DE GESTION D'AUTORISATION, INTERFACE GRAPHIQUE ET APPAREIL ASSOCIÉ

(30) Priority: 15.06.2023 CN 202310716159
(43) Date of publication of application: 31.12.2025
(73) Proprietor: Honor Device Co., Ltd., Shenzhen, Guangdong 518040 (CN)
(72) Inventor: YANG, Ruifeng, Shenzhen, Guangdong 518040 (CN); LI, Renpeng, Shenzhen, Guangdong 518040 (CN); YIN, Gaosheng, Shenzhen, Guangdong 518040 (CN)
(74) Representative: Goddar, Heinz J.
(86) International application number: PCT/CN2024/082995
(87) International publication number: WO 2024/255374

(56) References cited:
- WO-A1-2023/273350
- CN-A- 110 084 004
- CN-A- 113 094 670
- CN-A- 114 817 939
- CN-A- 115 017 473
- US-A1- 2014 207 511
- US-A1- 2020 202 321
- US-A1- 2021 397 728

## Description

This application claims priority to Chinese Patent Application No. 202310716159.2, filed with the China National Intellectual Property Administration on June 15, 2023 and entitled "PERMISSION MANAGEMENT METHOD, GRAPHICAL INTERFACE, AND RELATED APPARATUS".

### TECHNICAL FIELD

This application relates to the field of terminals, and in particular, to a permission management method, a graphical interface, and a related apparatus.

### BACKGROUND

Nowadays, an electronic device records a lot of privacy information of a user, for example, a calendar application records a schedule of the user. When the user uses the electronic device, some applications usually require the calendar application to grant some permissions to complete a corresponding task.

How to manage a permission to access the Calendar under the premise of protecting user privacy and ensuring the normal use of various applications is an urgent problem to be solved.

US 2021/397728 A1 discloses systems, methods, and computer-readable media for identifying an asset privacy management trigger on an end-user device related to a third-party application. In response to identifying the asset privacy management trigger, a privacy selection interface to enable a user to select a limited asset access option is displayed. In response to the limited asset access option being selected, an asset selection interface is displayed, where the asset selection interface is configured to define a sub-set of assets of the end-user device as authorized for the third-party application based on user selection. In response to a subsequent request to access assets of the end-user device by the third-party application, the third-party application is able to access only the defined sub-set of assets. For different third-party applications or scenarios, the asset privacy management triggers and asset sub-set definitions may vary.

US 2020/202321 A1 discloses: A computer-implemented method and system for a customer experience resource facility for scheduling a time-based resource on a commerce processing device and accepting an input for a product-based resource, and processing a payment in respect of the time-based resource and the product-based resource using a payment processing facility on the commerce processing device, where the payment processing facility processes payments through the commerce processing device based at least in part on an input received from the customer experience resource facility.

US 2014/207511 A1 discloses: A system and method for providing temporary and limited grants of calendar access is provided. An invitee or its proxy may provide an event planner or time broker with a particular grant of calendar access comprising a date range, particular days of the week, and a particular time interval. The grant of calendar access allows the event planner to more easily identify a block of time for scheduling the particular event, the invitee calendar being updated in real-time. In some embodiments, the event planner may schedule the event and place the event directly on the invitee's calendar.

### SUMMARY

This application discloses a permission management method, a graphical interface, and a related apparatus. In this method, an electronic device may store a schedule created by a calendar application and a schedule created by another application in the calendar application, and mark an application to which each schedule belongs. Then, when an application requests to obtain a permission to access the calendar application, the electronic device may grant a corresponding permission to the application by using a permission level selected by a user (for example, a permission level of accessing only a calendar created by the application) in a plurality of permission levels, thereby preventing the application from accessing a schedule created by another application without permission.

According to a first aspect, this application provides a permission management method, where the method includes: receiving a first operation when a first interface is displayed; and displaying a first window on the first interface in response to the first operation, where the first window includes: a name of a first application; a first option, where when a second operation on the first option is received, a permission of the first application to access a calendar application is set to a first permission, and the first permission is accessing all schedules of the calendar application; and a second option, where when a third operation on the second option is received, the permission of the first application to access the calendar application is set to a second permission, and the second permission is accessing only a schedule created by the first application.

After the method provided in the first aspect is implemented, the user may personalize the permission of the first application to access the calendar, including: the user may set the permission of the first application to access the calendar to accessing all schedules of the calendar application, or accessing only the schedule created by the first application. In this way, privacy security of the user can be ensured, and normal use of the first application can be ensured.

With reference to the method described in the first aspect, the first interface includes an interface of a settings application or an interface of the first application.

In this way, the user may adjust, in a plurality of manners, the permission of the first application to access the calendar, for example, adjust the permission in the settings application or in the first application.

With reference to the method described in the first aspect, the first window further includes access type information, and the access type information includes schedule reading, and/or schedule creation or deletion or modification.

In this way, permission setting may be performed for a specific access type of the access to the calendar by the first application.

With reference to the method described in the first aspect, the first application is a shopping application, and the first interface is an interface of the first application. The method further includes: receiving the second operation performed on the first option; receiving the second operation performed on the first option, and in response to the second operation, setting the permission of the first application to access the calendar application to the first permission; and displaying a second interface of the first application, where a commodity included in the second interface is different from a commodity included in the first interface.

In this way, after the user sets the access permission of the shopping application to accessing all schedules in the calendar application, the second interface displayed on the shopping application includes a commodity recommended according to the obtained all schedules, and before the user sets the access permission of the shopping application to accessing all schedules in the calendar application, the commodity included in the first interface of the shopping application is provided by default by the shopping application, and is independent of the schedule.

With reference to the method described in the first aspect, the first application is a schedule management application; and after the second operation on the first option is received, and the permission of the first application to access the calendar application is set to the first permission, the method further includes: receiving a second operation on the first option, and setting, in response to the operation, the permission of the first application to access the calendar application to the first permission; and displaying a third interface of the first application, where the third interface includes all schedules in the calendar application; or receiving a third operation on the second option, and setting, in response to the operation, the permission of the first application to access the calendar application to the second permission; and displaying a fourth interface of the first application, where the fourth interface includes only a schedule created by the first application.

For example, all schedules in the calendar application include a schedule of the second application, and the second application may be a shopping application or the like. The fourth interface of the first application may not include the schedule of the second application.

In this way, when the schedule management application is set to be allowed to access all schedules of the calendar application, all the schedules in the calendar may be displayed in synchronization in the schedule management application. When the schedule management application is set to be allowed to access only a schedule of the application, the schedule management application displays only the schedule of the schedule management application, that is, cannot read a schedule of another application in the calendar application. In this way, privacy of the user cannot be analyzed and privacy of the user cannot be disclosed.

With reference to the method described in the first aspect, after the permission of the first application to access the calendar application is set to the first permission, or after the permission of the first application to access the calendar application is set to the second permission, the method further includes: displaying a fifth interface of the calendar application, where the fifth interface includes the first schedule created by the first application.

In this way, the first application can create a schedule in the calendar application regardless of whether the first application is set to be allowed to access all schedules or access only the schedule of the first application.

With reference to the method described in the first aspect, when the interface of the calendar application is displayed, a fourth operation is received, and a second schedule is displayed on the interface of the calendar application in response to the fourth operation.

With reference to the method described in the first aspect, the first window further includes a third option. The method further includes: when a fifth operation on the third option is received, setting the permission of the first application to access the calendar application to a third permission, where the third permission is prohibiting access to a schedule of the calendar application.

In this way, when the user can personally set the permission of the first application to access the calendar, the user may further set the permission of the first application to prohibiting access to a schedule of the calendar application.

With reference to the method described in the first aspect, after the permission of the first application to access the calendar application is set to the first permission, the method further includes: displaying prompt information, where the prompt information is used to prompt the user to adjust the permission of the first application; and receiving a sixth operation, and setting, in response to the sixth operation, the permission of the first application to access the calendar application to the second permission.

In this way, when it is detected that there is a privacy risk of setting the permission of the first application to the first permission, the user may be prompted to modify the permission to another permission, for example, the second permission, to protect the user's privacy.

With reference to the method described in the first aspect, the first operation includes an operation performed on a calendar reminder control in the first application, or an operation performed on a calendar permission management option in the settings application.

In this way, the user may use different operations to output and display a window for managing the permission of the first application to access the calendar.

With reference to the method described in the first aspect, the first application is a third-party application.

With reference to the method described in the first aspect, the method is applied to an electronic device that includes an application operation permission management service (AppOpsService), and the method further includes: receiving a third operation on the second option; and in response to the third operation, storing, in the AppOpsService, the permission of the first application to access the calendar application as the second permission.

With reference to the method described in the first aspect, after the storing, in the AppOpsService, the permission of the first application to access the calendar application as the first permission, the method further includes: receiving a second operation on the first option; and in response to the second operation, modifying the permission of the first application to access the calendar application stored in the AppOpsService from the second permission to the first permission.

In this way, the latest permission of the first application may be refreshed and stored in the AppOpsService according to a user operation.

The method is applied to an electronic device including a calendar provider (Calendar provider), and the method includes: after a third operation on the second option is received, storing a first schedule of the first application in the Calendar provider, and marking the first schedule as belonging to the first application.

With reference to the method described in the first aspect, the method is applied to an electronic device including an AppOpsService and a Calendar provider, and after the second operation on the first option is received, the method includes: the first application requests to read a schedule from the Calendar provider; the Calendar provider finds, from the AppOpsService, that the permission of the first application to access the calendar application is the first permission; and the Calendar provider returns all schedules in the calendar application to the first application.

With reference to the method described in the first aspect, the method is applied to an electronic device including an AppOpsService and a Calendar provider, and after the third operation on the second option is received, the method includes: the first application requests to read a schedule from the Calendar provider; the Calendar provider finds, from the AppOpsService, that the permission of the first application to access the calendar application is the second permission; and the Calendar provider returns only the first schedule belonging to the first application to the first application.

In this way, a permission of the application to access a corresponding schedule may be granted to the application based on a permission of the application according to an application to which the schedule stored in the Calendar provider belongs and a permission of the application stored in the AppOpsService.

According to a second aspect, this application provides an electronic device, where the electronic device includes one or more memories and one or more processors; and the memory is coupled to the one or more processors, the memory is configured to store computer program code, the computer program code includes computer instructions, and the one or more processors invoke the computer instructions to cause the electronic device to perform the method according to any one of the implementations of the first aspect.

According to a third aspect, this application provides a computer-readable storage medium, where the computer-readable storage medium includes instructions, and when the instructions are run on an electronic device, the electronic device is enabled to perform the method according to any one of the implementations of the first aspect.

### BRIEF DESCRIPTION OF DRAWINGS

FIG. 1 is a schematic diagram of interfaces for managing "a plurality of permission levels" for accessing a calendar application according to an embodiment of this application;
FIG. 2A(1) to FIG. 2B are a first schematic diagram of operation interfaces for managing a permission of an application to access a calendar application in Settings according to an embodiment of this application;
FIG. 2C(1) to FIG. 2D are a second schematic diagram of operation interfaces for managing a permission of an application to access a calendar application in Settings according to an embodiment of this application;
FIG. 2E(1) to FIG. 2E(4) are a third schematic diagram of operation interfaces for managing a permission of an application to access a calendar application in Settings according to an embodiment of this application;
FIG. 2F(1) to FIG. 2F(4) are a fourth schematic diagram of operation interfaces for managing a permission of an application to access a calendar application in Settings according to an embodiment of this application;
FIG. 3A(1) to FIG. 3A(4) are a schematic diagram of operation interfaces for managing a permission of an application A to access a calendar application in the application according to an embodiment of this application;
FIG. 3B(1) to FIG. 3B(4) are a schematic diagram of operation interfaces for managing a permission of an application B to access a calendar application in the application according to an embodiment of this application;
FIG. 3C(1) to FIG. 3C(4) are a schematic diagram of operation interfaces for managing a permission of an application C to access a calendar application in the application according to an embodiment of this application;
FIG. 3D(1) to FIG. 3D(4) illustrate an example of a schematic diagram of operation interfaces for creating a schedule in a calendar application;
FIG. 3E(1) and FIG. 3E(2) illustrate an example scenario in which an application A recommends a corresponding service based on a schedule read from a calendar application;
FIG. 3F(1) to FIG. 3F(4) illustrate an example of a schematic diagram of operation interfaces for creating a schedule in an application C;
FIG. 3G(1) to FIG. 3H(2) illustrate examples of schedule information provided in a calendar application and an application C;
FIG. 3I(1) to FIG. 3I(4) illustrate an example of a schematic diagram of operation interfaces for changing a permission of an application C to access a calendar application;
FIG. 4 is a procedure of a permission management method according to an embodiment of this application;
FIG. 5A and FIG. 5B are a specific implementation of a permission management method according to an embodiment of this application;
FIG. 6 is a schematic diagram of a hardware architecture of an electronic device according to an embodiment of this application; and
FIG. 7 is a schematic diagram of a software architecture of an electronic device according to an embodiment of this application.

### DESCRIPTION OF EMBODIMENTS

The following clearly and completely describes the technical solutions in embodiments of this application with reference to the accompanying drawings. In the descriptions of embodiments of this application, unless otherwise specified, "/" means "or", for example, A/B may mean A or B. In this specification, "and/or" merely describes an association relationship between associated objects, and represents that three relationships may exist. For example, A and/or B may represent the following cases: Only A exists, both A and B exist, and only B exists.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of the embodiments of this application, unless otherwise stated, "a plurality of" means two or more.

An "embodiment" in this application means that a specific feature, structure, or characteristic described with reference to the embodiment may be included in at least one embodiment of this application. The term appearing at various locations in the specification does not necessarily refer to a same embodiment, or an independent or alternative embodiment mutually exclusive with another embodiment. A person skilled in the art explicitly and implicitly understands that the described embodiments in this application may be combined with another embodiment.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as java or an extensible markup language (extensible markup language, XML). Interface source code is parsed and rendered on an electronic device, and is finally presented as content that can be identified by the user. The user interface is usually in a representation form of a graphical user interface (graphic user interface, GUI), and the graphical user interface is a user interface that is related to a computer operation and that is displayed in a graphical manner. The user interface may be a visual interface element such as a text, an icon, a button, a menu, a tab, a text box, a dialog box, a status bar, a navigation bar, or a Widget displayed on a display screen of the electronic device.

Currently, some applications (including third-party applications) in an electronic device need to be authorized by a calendar application to complete a corresponding task. For example, when a user wants to enable services such as rush purchase reminders and sign-in reminders in a shopping application, the shopping application needs to obtain authorization from the calendar application, so that the purpose of reminding the user to perform rush purchasing and sign-in can be achieved through the calendar application. For another example, when the user wants to reserve a movie/series/program in a video application, the video application also needs to obtain authorization from the calendar application, so that the video application can remind the user to watch the movie/series/program when it starts. For another example, when the user wants to implement schedule management function in a schedule management application, the schedule management application needs to be authorized by the calendar application to obtain all schedules in the calendar application to remind the user to perform processing. There are many other applications that require authorization from the calendar application, which are not listed here one by one.

However, default permissions currently granted by the calendar application (referred to as native calendar access permissions) include only allowing access and prohibiting, where allowing access is equivalent to calendar application authorization. After obtaining the permission granted by the calendar application, some applications can access all schedules in the calendar application. All the schedules include schedules newly created by the user in the calendar application and schedules of other applications read by the calendar application. Accessing all the schedules in the calendar application may include reading all the schedules, creating new schedules, modifying/deleting all the schedules, and the like. If these applications are third-party applications, the schedules may be illegally queried, tampered, or the like, which threatens the privacy of the user.

To resolve the foregoing problem, this application provides a permission management method, a graphical interface, and a related apparatus. In this method, an electronic device stores a schedule created by the calendar application itself and a schedule created by another application in the calendar application, and marks an application to which each schedule belongs. Then, when an application requests to obtain a permission to access the calendar application, the electronic device may grant a corresponding permission to the application by using a permission level selected by a user (for example, a permission level of accessing only a calendar created by the application) in a plurality of permission levels, thereby preventing the application from accessing a schedule created in the calendar system by another application without permission.

Concepts involved in this application are described as follows.

**The calendar application** belongs to system applications. A system application refers to an application provided or developed by a manufacturer of an electronic device. The manufacturer of the electronic device may include a producer, a supplier, a provider, an operator, or the like of the electronic device.

**A third-party application** is an application that is not provided or developed by the manufacturer of the electronic device.

**Accessing the calendar application** means reading or writing the calendar. Specifically, "reading" refers to reading a schedule in the calendar application, and "writing" includes creating a new schedule in the calendar application, or modifying/deleting a schedule in the calendar application.

**The plurality of levels of permission** include but are not limited to prohibiting access, allowing access to all calendars, and accessing only a calendar created by the application. Prohibiting is one of the native calendar access permissions of the electronic device, and the two permission levels: allowing access to all calendars and accessing only a calendar created by the application, are obtained through further refinement of allowing access in the native calendar access permissions.

**Accessing only a calendar created by the application means** that the application can access only a schedule created by the application in the calendar application, and cannot access a schedule created by the calendar application or created by another application in the calendar application. Specifically, when accessing a calendar refers to reading a calendar, accessing only a calendar created by the application refers to allowing the application to read only a schedule created by the application in the calendar application. When accessing a calendar refers to creating a calendar, accessing only a calendar created by the application refers to allowing the application to write only the schedule created by the application into the calendar application. When accessing a calendar refers to modifying/deleting a calendar, accessing only a calendar created by the application means allowing the application to delete/modify only a schedule created by the application.

**Allowing access to all calendars** means that the application can access all schedules in the calendar application, including schedules created by the calendar application, and schedules created by the application and other applications in the calendar application. Specifically, when accessing a calendar refers to reading a calendar, allowing access to all calendars refers to allowing the application to read all schedules in the calendar application. When accessing a calendar refers to creating a new calendar, allowing access to all calendars refers to allowing the application to write, in the calendar application, a schedule created by the application or another application. When accessing a calendar refers to modifying/deleting a calendar, allowing access to all calendars means allowing the application to delete/modify all schedules in the calendar application.

**Prohibiting** refers to prohibiting the application from accessing a schedule in the calendar application. Specifically, when accessing a calendar refers to reading a calendar, prohibiting refers to prohibiting the application from reading a schedule in the calendar application. When accessing a calendar refers to creating a new calendar, prohibiting refers to prohibiting the application from writing a schedule into the calendar application. When accessing a calendar refers to modifying/deleting a calendar, prohibiting refers to prohibiting the application from deleting/modifying a schedule in the calendar application.

It can be learned that, after the method provided in this application is implemented, the following beneficial effects may be obtained:
(1) Personalize setting of the access permission of the calendar application. Specifically, based on a user operation, the calendar application may grant different levels of permission to different applications.
(2) Secure the privacy of the user and ensure the normal use of applications. Specifically, for an application that does not have permission to access all calendars, the application cannot obtain a schedule created by another application in the calendar application, and therefore cannot read a schedule of the another application in the calendar application. Therefore, privacy of the user cannot be analyzed, and the privacy of the user cannot be disclosed. In addition, the application of this type cannot modify or delete a schedule of another application in the calendar application, and therefore, the schedule of the user cannot be illegally tampered with. However, for an application that does not have access to all calendars but have access to calendars created by the application itself, it may be sufficient to provide the user with corresponding functions by creating a schedule in the calendar application and obtaining the schedule created by the application itself in the calendar application.

The following describes, with reference to the UI embodiment, a permission management method and a graphical interface that are provided in this application.

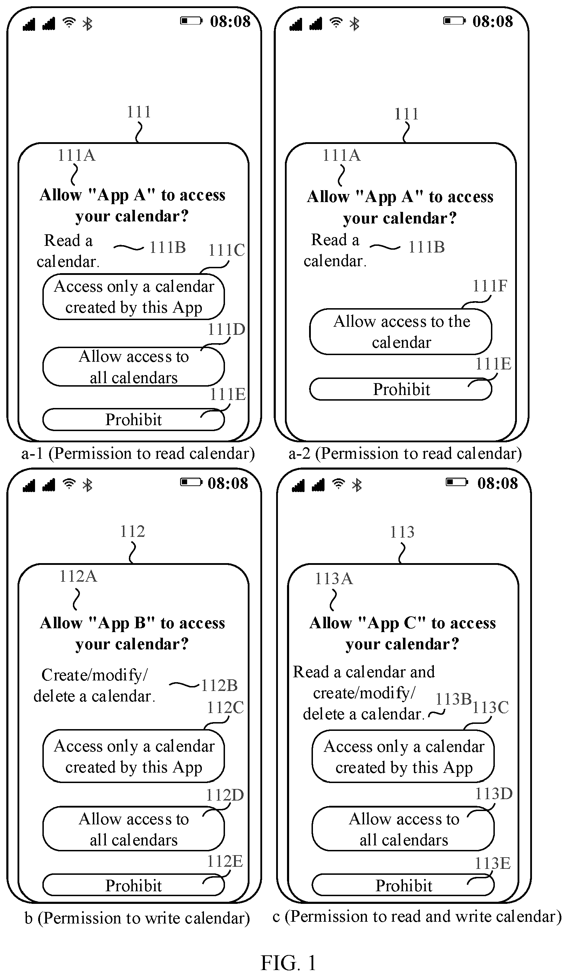

**FIG. 1** **illustrates an example of a schematic diagram of interfaces for managing "a plurality of permission levels" for accessing a calendar application.**

a-1 in FIG. 1 illustrates an example of a management interface for "a plurality of permission levels" corresponding to calendar read permissions. The management interface includes a window 111, where the window 111 includes prompt information 111A used to request the user whether to allow an "application A" to access the calendar, and includes prompt information 111B indicating that accessing the calendar is specifically reading the calendar, and options corresponding to three calendar access permission levels, that is, an option 111C corresponding to accessing only a calendar created by the application, an option 111D corresponding to allowing access to all calendars, and an option 111E corresponding to prohibiting.

The user may trigger, by selecting any one of the foregoing three options in a-1 in FIG. 1, the electronic device to use a calendar access permission corresponding to the option for the application A.

a-1 in FIG. 1 merely illustrates an example of a management interface for "a plurality of permission levels" corresponding to the calendar read permissions. In another implementable manner, the permission levels provided by the management interface may further be shown in a-2 in FIG. 1. For example, the management interface provides only two permission levels, that is, an option 111F corresponding to allowing to access a calendar, and an option 111E corresponding to prohibiting. This is because, for an application that only read a calendar, the application does not create a schedule in the calendar application. Therefore, when the application reads the calendar application, a case in which the application reads a schedule created by the application itself does not exist. Therefore, it is no longer necessary to provide an option corresponding to accessing only a schedule created by the application. b in FIG. 1 illustrates an example of a management interface for "a plurality of permission levels" corresponding to calendar write permissions. The management interface includes a window 112, where the window 112 includes prompt information 112A used to request the user whether to allow an "application B" to access the calendar, and includes prompt information 112B indicating that accessing the calendar is specifically writing (including creating/modifying/deleting) a calendar, and options corresponding to three calendar access permission levels, that is, an option 112C corresponding to accessing only a calendar created by the application, an option 112D corresponding to allowing access to all calendars, and an option 112E corresponding to prohibiting.

The user may trigger, by selecting any one of the foregoing three options in b in FIG. 1, the electronic device to use a calendar access permission corresponding to the option for the application B.

c in FIG. 1 illustrates an example of a management interface for "a plurality of permission levels" corresponding to calendar read and write permissions. The management interface includes a window 113, where the window 113 includes prompt information 113A used to request the user whether to allow an "application C" to access the calendar, and includes prompt information 113B indicating that accessing the calendar is specifically reading and writing a calendar, and options corresponding to three calendar access permission levels, that is, an option 113C corresponding to accessing only a calendar created by the application, an option 113D corresponding to allowing access to all calendars, and an option 113E corresponding to prohibiting.

The user may trigger, by selecting any one of the foregoing three options in c in FIG. 1, the electronic device to use a calendar access permission corresponding to the option for the application C.

In an optional implementation, some applications (for example, the application A) accessing the calendar application specifically only need to perform a read operation on the calendar. Some applications (for example, the application B) accessing the calendar application specifically only need to perform a write operation on the calendar. Other applications (for example, the application C) accessing the calendar application specifically need to perform a read operation on the calendar and further need to perform a write operation. Therefore, for different applications, the stated access to the calendar application may contain different operations when the applications request the permission to access the calendar application.

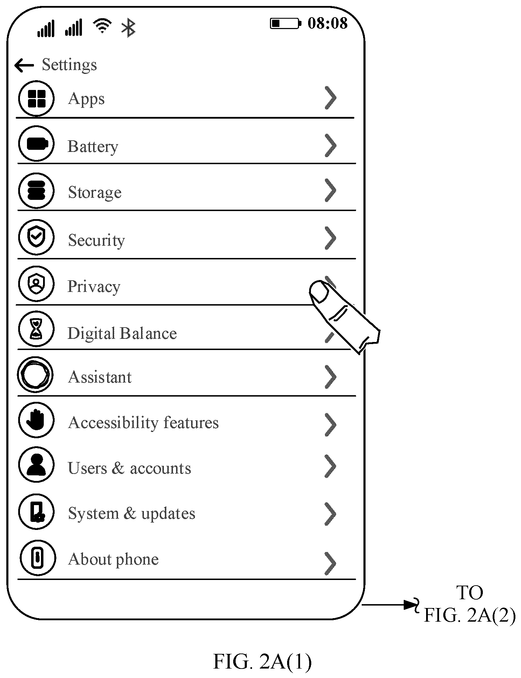

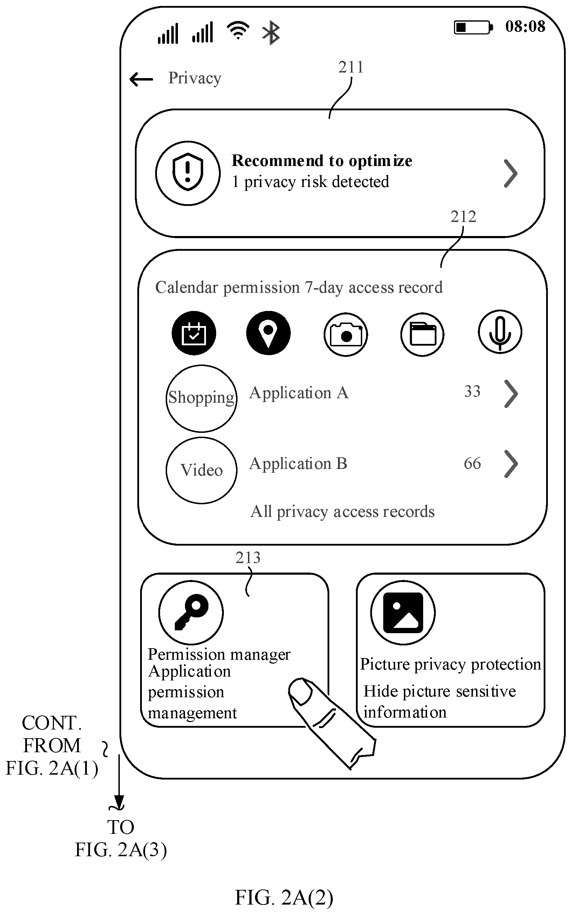

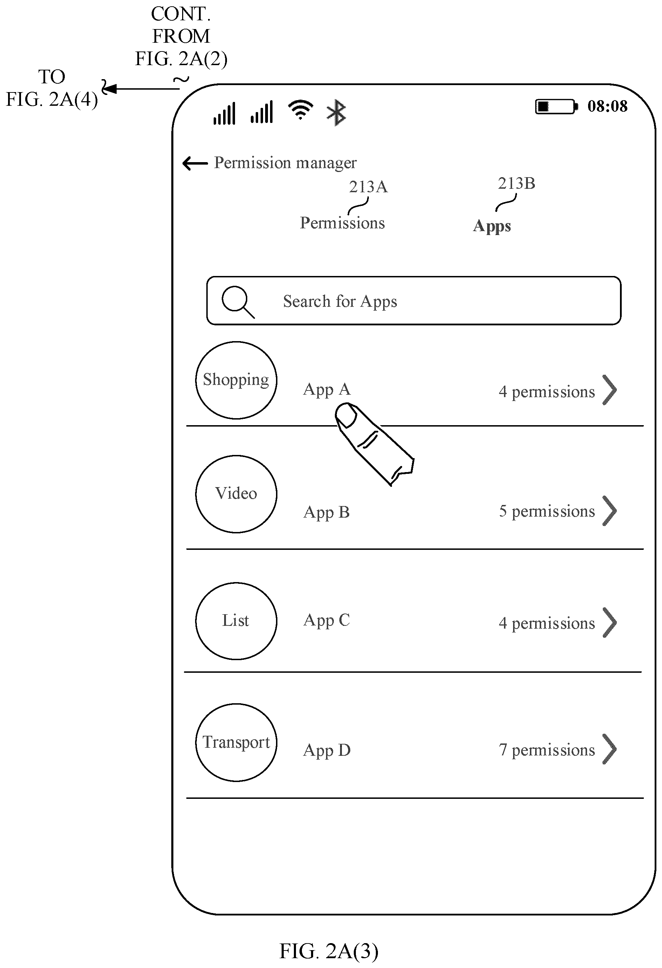

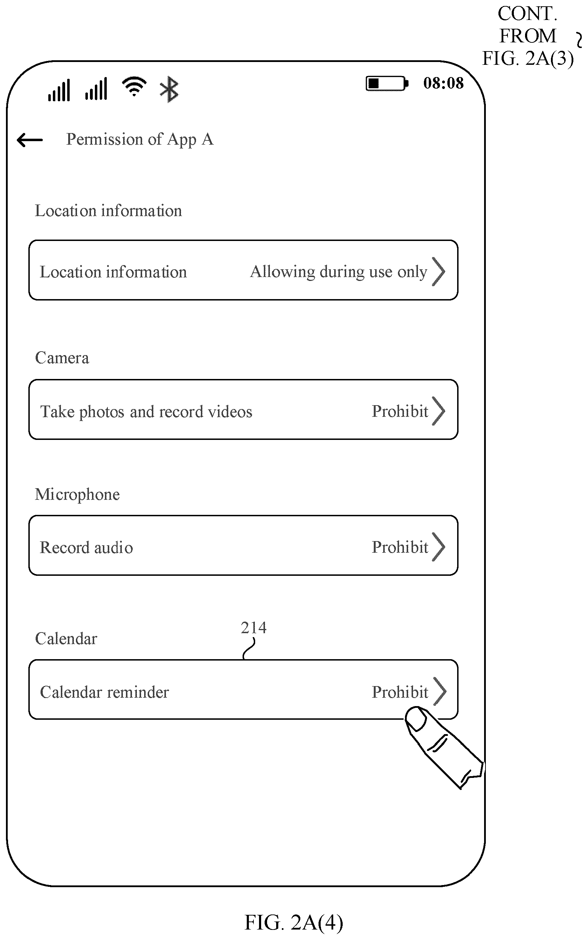

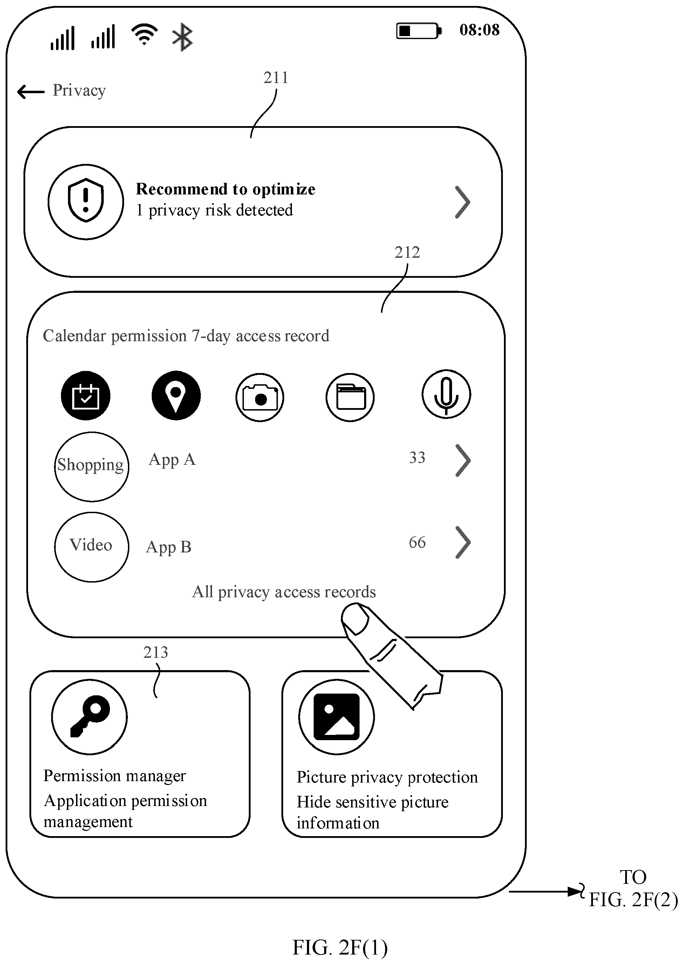

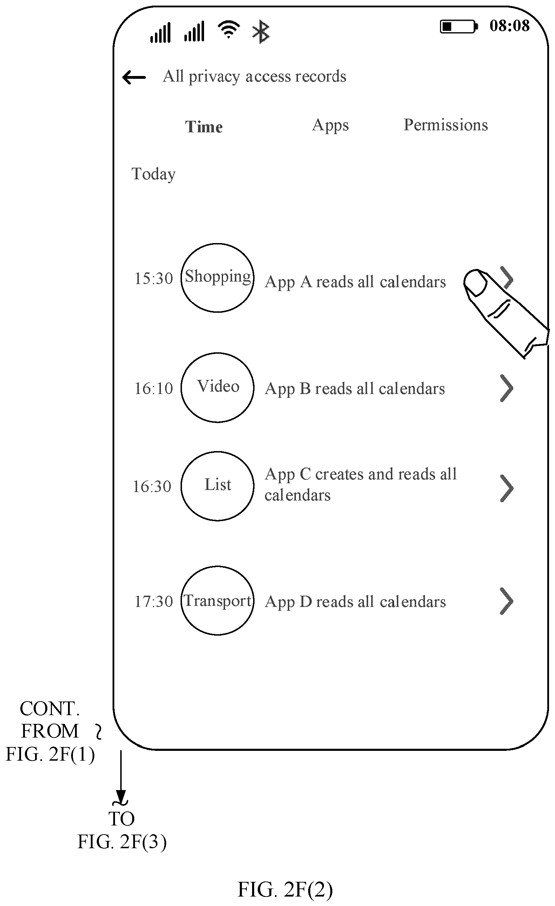

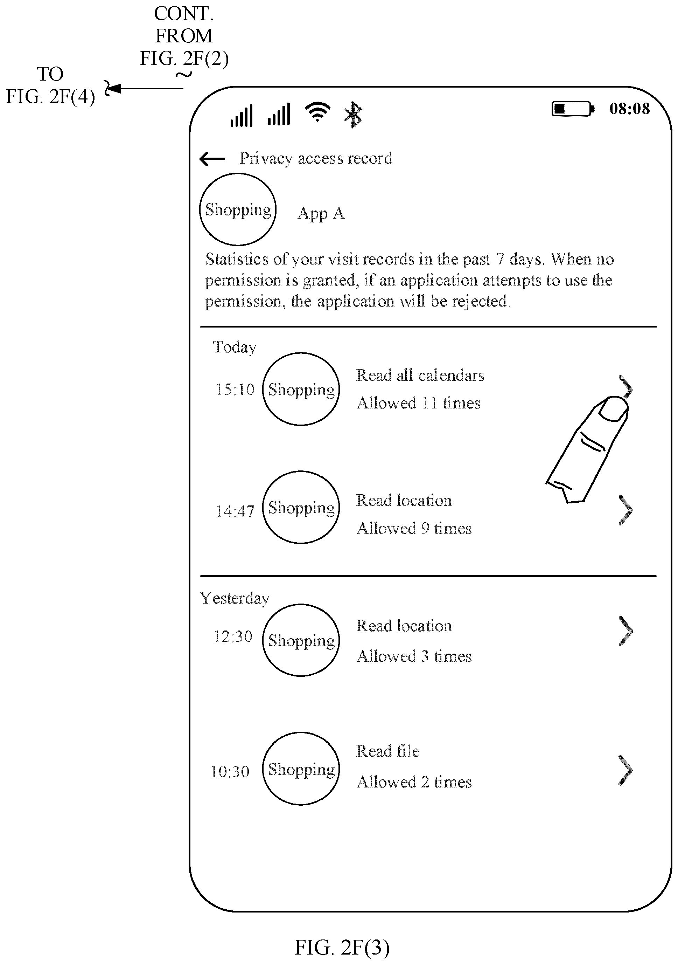

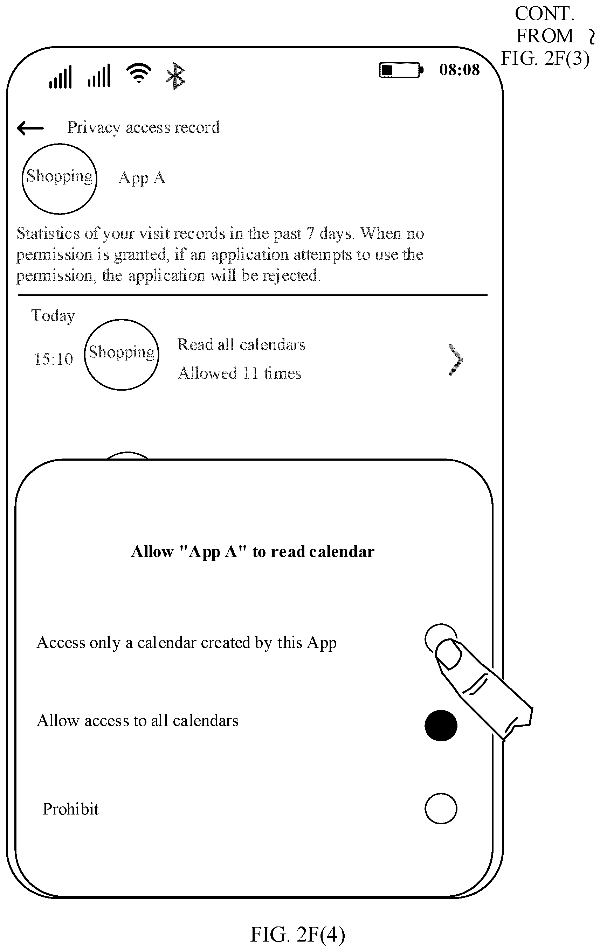

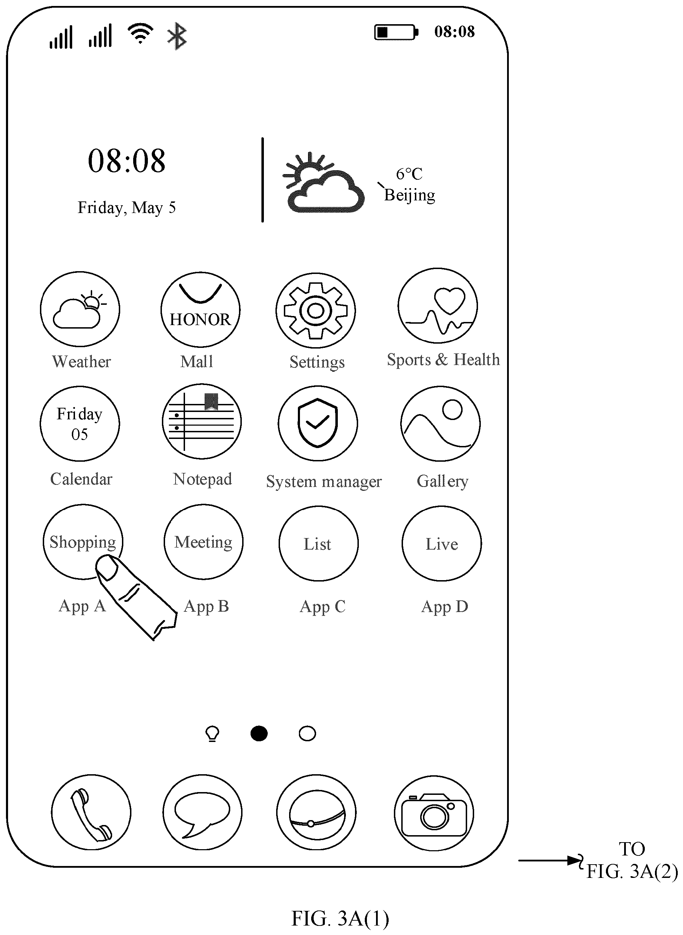

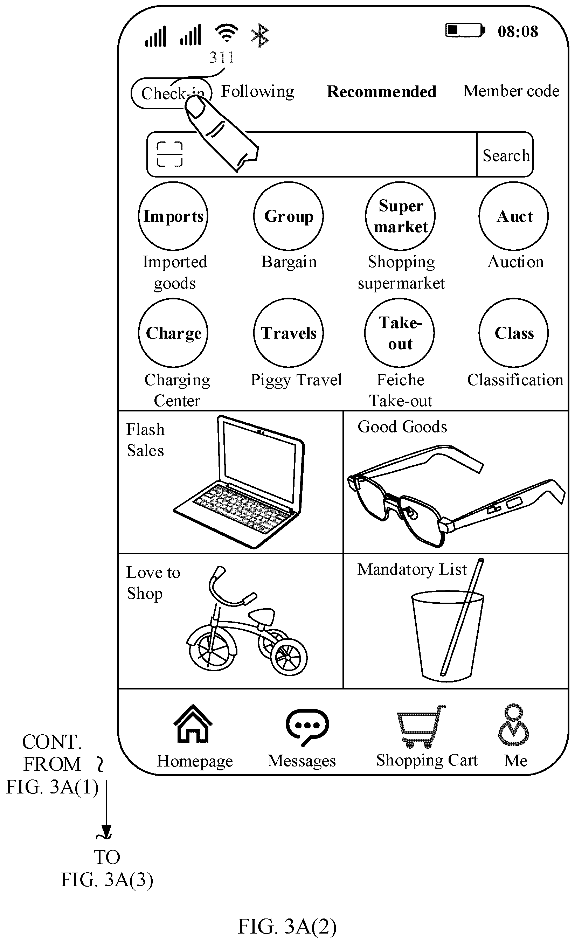

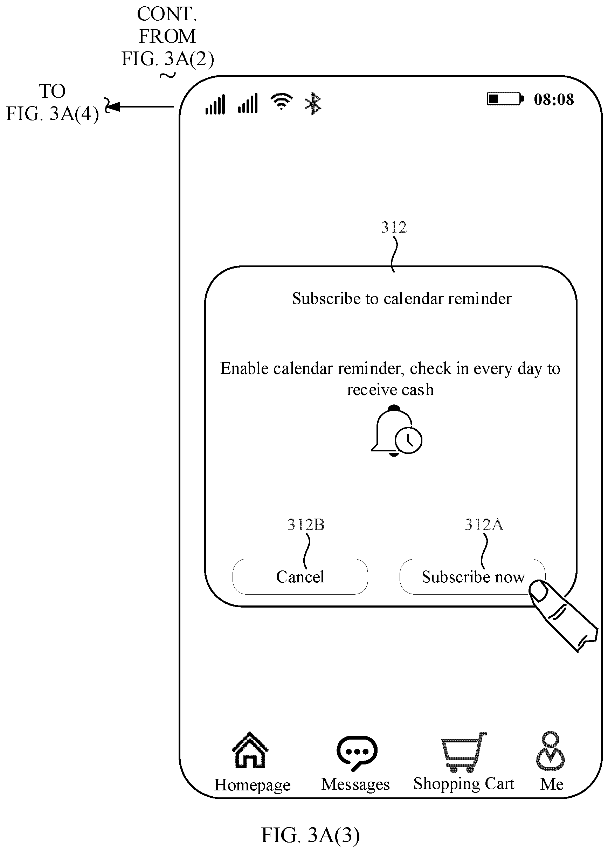

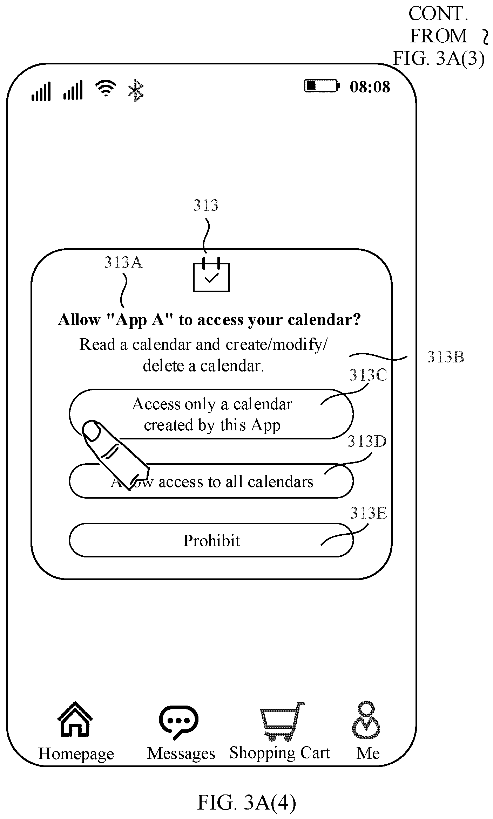

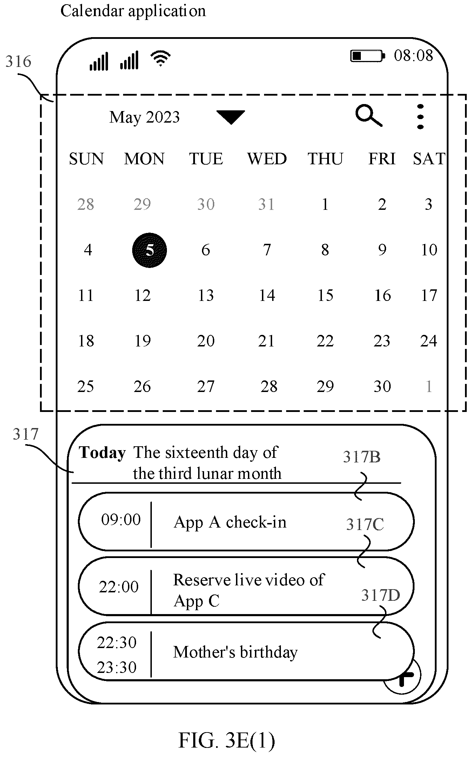

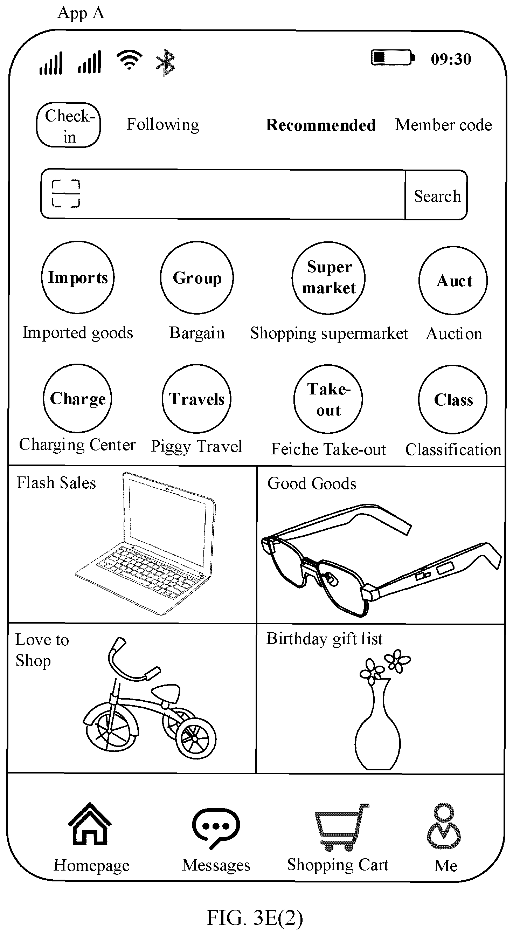

In an optional implementation, the window 111/window 112/window 113 shown in FIG. 1 may be triggered to be displayed by setting calendar access permissions dedicated to managing various types of applications that are provided in the application (for details, refer to the description in FIG. 2A(1) to FIG. 2F(4) below), or may be triggered to be displayed when a user enables a calendar reminder function in the application A/application B/application C (for details, refer to the description in FIG. 3A(1) to FIG. 3E(2) below).

In an optional implementation, in addition to providing a management service interaction interface of "a plurality of permission levels" for the user in a form of a window shown in FIG. 1 as an example, the management service interaction interface of "a plurality of permission levels" may be provided for the user in another form, which is not limited in this embodiment of this application.

In this embodiment of this application, the foregoing four interfaces shown in FIG. 1 may also be referred to as a first interface.

**FIG. 2A(1) to FIG. 2F(4)** **illustrate an example of a schematic diagram of a set** of **operation interfaces for managing a permission of an application to access a calendar application in Settings.**

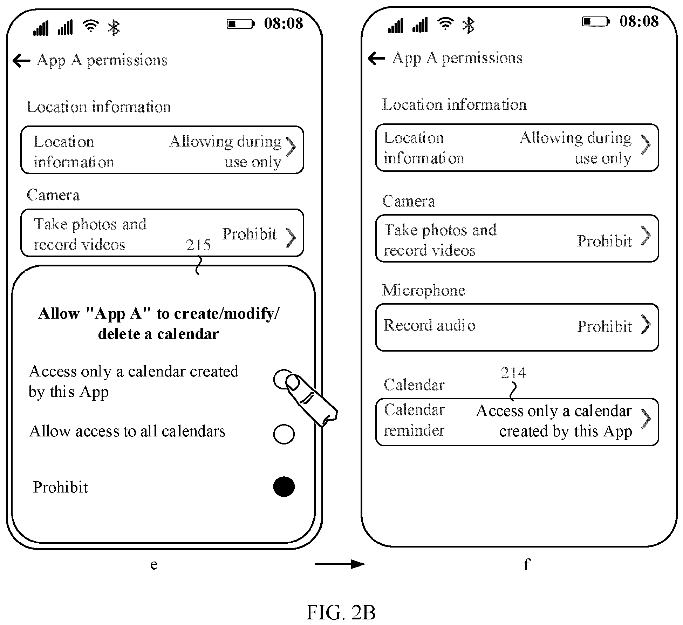

**FIG. 2A(1) to FIG. 2B** **show a first operation method for managing a permission of an application to access the calendar application in Settings.**

FIG. 2A(1) is an interface provided by the Settings application, and the interface may include a plurality of setting options, for example, a privacy option.

The user may trigger the electronic device to display a privacy detail page by tapping the privacy option in the setting options. In response to an operation performed on the privacy option in FIG. 2A(1), the electronic device is triggered to open the privacy detail page. For details, refer to FIG. 2A(2).

FIG. 2A(2) is the privacy detail page opened through the privacy option in the Settings application. The privacy detail page includes a "Recommend to optimize" card 211, a card 212 used to view a privacy access record, a card 213 (or referred to as an option or a control) used to manage an application permission, another card, and the like.

The user may tap the card 213 for managing an application permission to trigger the electronic device to open the permission management detail page. In response to an operation performed on the card 213 for managing an application permission in FIG. 2A(2), the electronic device is triggered to open the permission management detail page. For details, refer to FIG. 2A(3).

FIG. 2A(3) is the permission management detail page. The permission management detail page includes a permission column 213A and an application column 213B. The user can select the permission column 213A or the application column 213B to trigger the electronic device to display a series of options corresponding to the selected column in the permission management detail page. For example, when the application column 213B shown in c is selected, a series of application options are displayed in the permission management detail page, including an option corresponding to the application A, an option corresponding to the application B, an option corresponding to the application C, an option corresponding to the application D, and the like.

The user may further trigger, by selecting an option corresponding to any application, the electronic device to display an application permission detail page corresponding to the selected application. In response to an operation performed on the option corresponding to the application A in FIG. 2A(3), the electronic device is triggered to open a permission detail page of the application A. For details, refer to FIG. 2A(4).

FIG. 2A(4) is the permission detail page of the application A, and the permission detail page of the application A includes a plurality of permission setting options, such as a permission setting option 214 corresponding to Calendar, a permission setting option corresponding to Location information, a permission setting option corresponding to Camera, and a permission setting option corresponding to Microphone. Each permission option further displays a permission level that is being used by the current permission. For example, the permission setting option 214 corresponding to the calendar displays "Prohibit", which represents that the calendar permission owned by the current application A is prohibiting, that is, the application A is prohibited from accessing the calendar application.

The user may further manage the calendar permission owned by the application A by tapping the permission setting option 214 corresponding to the calendar. In response to an operation performed on the permission setting option 214 corresponding to the calendar in FIG. 2A(4), the electronic device is triggered to pop up a window that is used to set the permission level of the application A to access the calendar application. For details, refer to e in FIG. 2B. In this embodiment of this application, the interface shown in FIG. 2A(4) may also be referred to as a first interface, and the operation on the permission setting option 214 corresponding to the calendar shown in FIG. 2A(4) may also be referred to as a first operation.

e in FIG. 2B is still the permission detail page of the application A, and in this case, the permission detail page of the application A displays a window 215. The window 215 includes prompt information that is used to indicate an operation involved in the application A accessing the calendar application. The prompt information is, for example, allowing the "application A" to create/modify/delete a calendar, and further includes options corresponding to a plurality of permission levels for accessing the calendar. The options include, for example, three options: "Access only a calendar created by this App", "Allow access to all calendars", and "Prohibit". The "Prohibit" option is in the selected state, which indicates that the permission of the current application A to access the calendar is "prohibiting". In this embodiment of this application, the window 215 may also be referred to as a first window, the application A included in the window 215 may also be referred to as a first application, the prompt information that is included in the window 215 and that is used to indicate the operation related to the application A accessing the calendar application may also be referred to as access type information, "Allow access to all calendars" included in the window 215 may also be referred to as a first permission, the option of "Allow access to all calendars" may also be referred to as a first option, "Access only a calendar created by this App" may also be referred to as a second permission, the option of "Access only a calendar created by this App" may also be referred to as a second option, "Prohibit" may also be referred to as a third permission, and the option of "Prohibit" may also be referred to as a third option. An operation performed on the first option may be referred to as a second operation, an operation performed on the second option may be referred to as a third operation, and an operation performed on the third option may be referred to as a fifth operation.

By tapping the "Access only a calendar created by this App" option, the user can change the permission level of the application A to access a calendar from "Prohibit" to "Access only a calendar created by this App". In response to an operation performed on "Access only a calendar created by this App" in e in FIG. 2B, the electronic device is triggered to change the permission level of the application A to access the calendar to "Access only a calendar created by this App". For details, refer to f in FIG. 2B.

In FIG. 2B, f is still the permission detail page of the application A. In this case, the permission setting option 214 corresponding to the calendar displays "Access only a calendar created by this App", which represents that the calendar permission of the current application A is accessing only a schedule created by the application A in the calendar application, and cannot access a schedule created by another application or the calendar application itself in the calendar application.

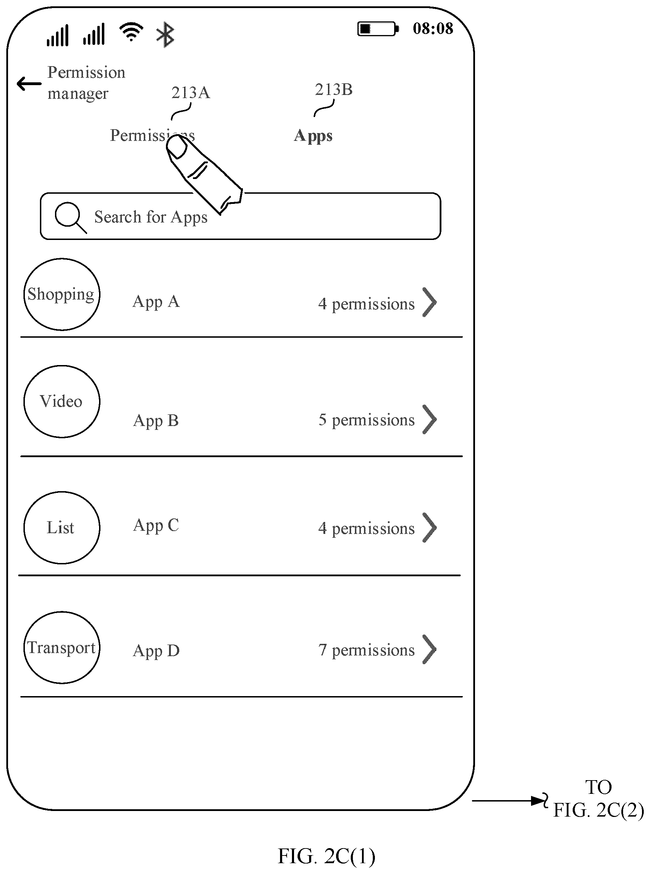

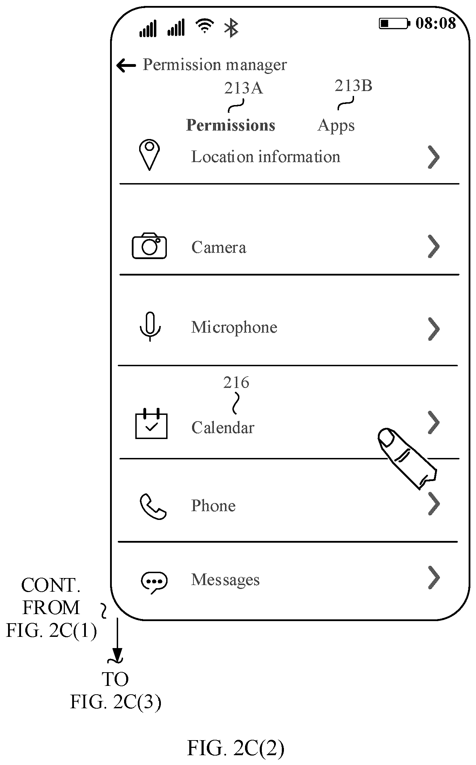

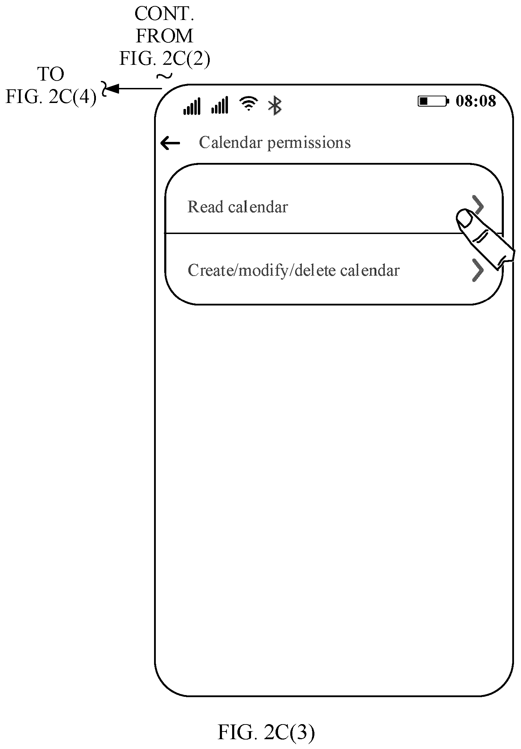

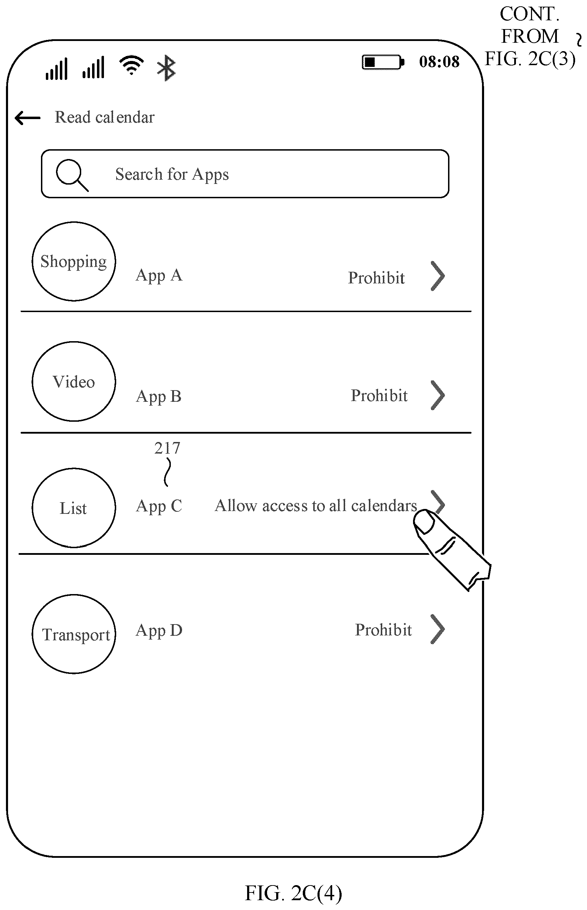

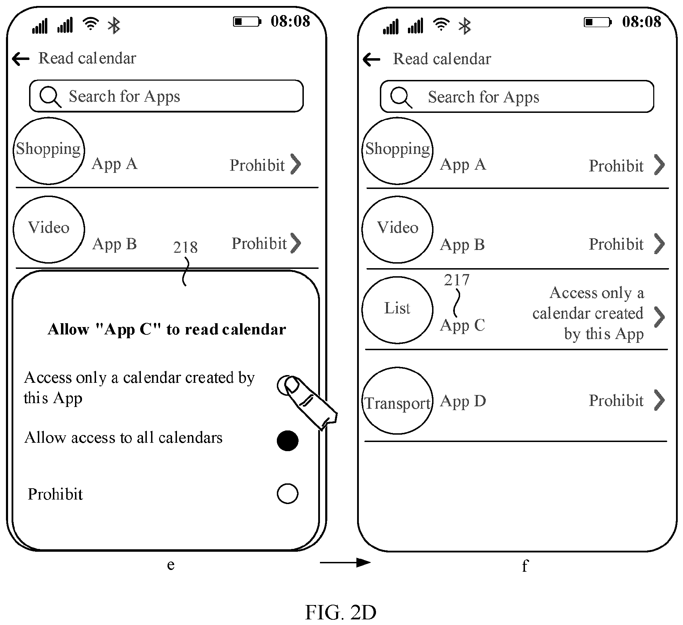

**FIG. 2C(1) to FIG. 2D** **show a second operation method for managing a permission of an application to access the calendar application in Settings.**

FIG. 2C(1) is a permission management detail page (the same as that in the foregoing FIG. 2A(3)), and the permission management detail page includes a permission column 213A and an application column 213B. For other descriptions of the permission management detail page, refer to the foregoing description of FIG. 2A(3). Details are not described herein again.

The user may select the permission column 213A to trigger the electronic device to display a series of permission options corresponding to the selected permission column in the permission management detail page. For details, refer to FIG. 2C(2).

FIG. 2C(b) is still a permission management detail page. The permission column 213A in the permission management detail page is selected, and a series of permission options corresponding to the permission column 213A are displayed, for example, include a permission setting option 216 corresponding to Calendar, a permission setting option corresponding to Location information, a permission setting option corresponding to Camera, a permission setting option corresponding to Microphone, a permission setting option corresponding to Phone, and a permission setting option corresponding to Messages.

The user can tap the permission setting option 216 corresponding to Calendar to further manage the permissions of Calendar. In response to an operation performed on the permission setting option 216 corresponding to Calendar in FIG. 2C(2), the electronic device is triggered to display the calendar permission detail page. For details, refer to FIG. 2C(3).

FIG. 2C(3) is the calendar permission detail page. The calendar permission detail page displays the "Read calendar" option and the "Create/Modify/Delete calendar" option, which are respectively related to the calendar read operation and the calendar write operation.

The user can set the permission to read or write a calendar by tapping either of the "Read calendar" option and the "Create/Modify/Delete calendar" option. For example, in response to an operation of tapping the "Read calendar" option, the electronic device is triggered to display a permission setting detail page for reading a calendar. For details, refer to FIG. 2C(4).

FIG. 2C(4) is a permission setting detail page for reading a calendar. In this case, the permission setting detail page for reading a calendar includes an option corresponding to the application A, an option corresponding to the application B, an option 217 corresponding to the application C, an option corresponding to the application D, and the like. In addition, an option corresponding to each application further displays a permission level for the application to read a calendar. For example, the option 217 corresponding to the application C displays a permission level of "Allow access to all calendars".

The user may select an option corresponding to any application to reset a permission level of the application to read a calendar. Specifically, in response to an operation performed on the option 217 corresponding to the application C in FIG. 2C(4), the electronic device is triggered to pop up a window that is used to set the permission level of the application C to read the calendar. For details, refer to e in FIG. 2D. In this embodiment of this application, the interface shown in FIG. 2C(4) may also be referred to as a first interface, and an operation performed on the option 217 corresponding to the application C shown in FIG. 2C(4) may also be referred to as a first operation.

e in FIG. 2D is still a permission setting detail page for reading a permission, and in this case, the permission setting detail page for reading a permission displays a window 218. The window 218 includes prompt information that allows the "application C" to read a calendar, and further includes options corresponding to a plurality of permission levels for reading a calendar, such as "Access only a calendar created by this App", "Allow access to all calendars", and "Prohibit". The "Allow access to all calendars" option is in the selected state, representing that the permission of the current application C to read the calendar is "Allow access to all calendars". In this embodiment of this application, the window 218 may also be referred to as a first window, the application C included in the window 218 may also be referred to as a first application, the prompt information that is included in the window 218 and that is used to indicate the application C reading the calendar may also be referred to as access type information, "Allow access to all calendars" included in the window 218 may also be referred to as a first permission, the option of "Allow access to all calendars" may also be referred to as a first option, "Access only a calendar created by this App" may also be referred to as a second permission, the option of "Access only a calendar created by this App" may also be referred to as a second option, "Prohibit" may also be referred to as a third permission, and the option of "Prohibit" may also be referred to as a third option. An operation performed on the first option may be referred to as a second operation, an operation performed on the second option may be referred to as a third operation, and an operation performed on the third option may be referred to as a fifth operation.

By tapping the "Access only a calendar created by this App" option, the user can change the permission level of the application C to read a calendar from "Allow access to all calendars" to "Access only a calendar created by this App". In response to an operation performed on "Access only a calendar created by this App" in e in FIG. 2D, the electronic device is triggered to change the permission level of the application C to access the calendar application to "Access only a calendar created by this App", as shown in f in FIG. 2D.

In FIG. 2D, f is still the permission setting detail page of calendar reading. In this case, the option 217 corresponding to the application C displays "Access only a calendar created by this App", which represents that the calendar permission of the current application C is accessing only a schedule created by the application C in the calendar application, and cannot access a schedule created by another application or the calendar application itself in the calendar application.

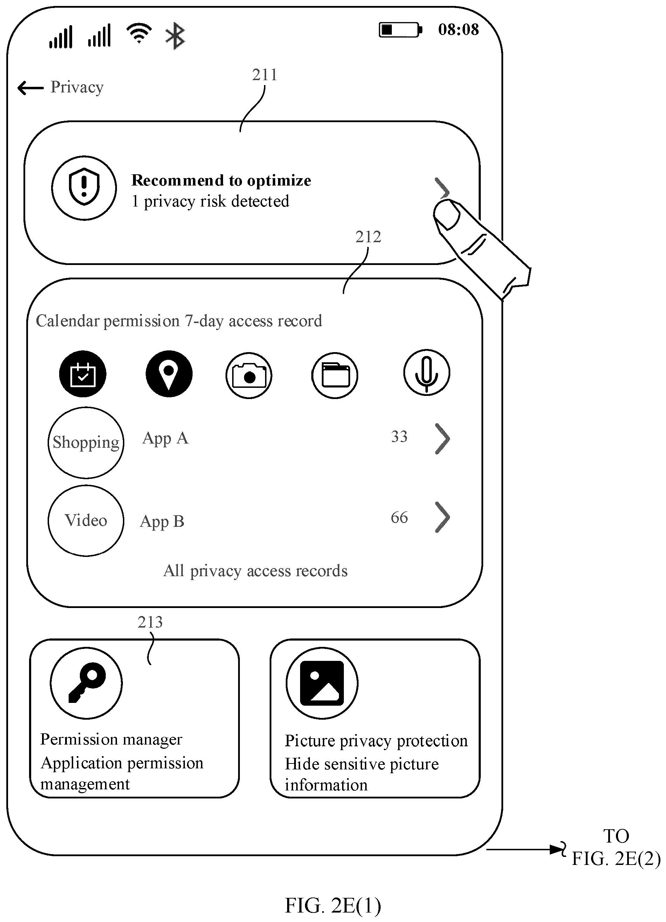

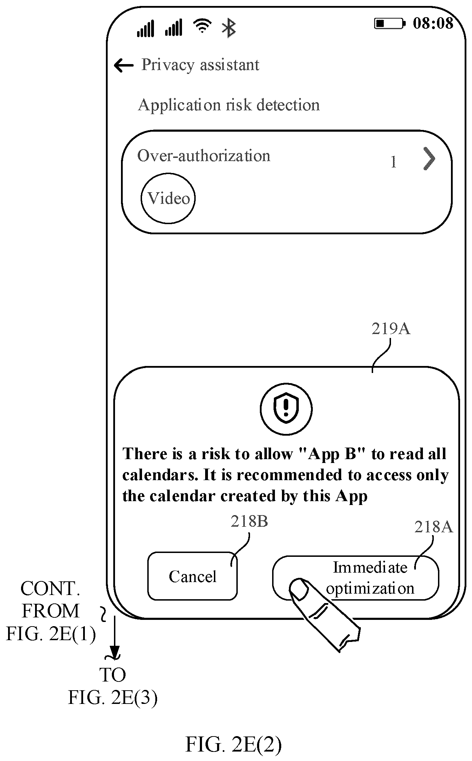

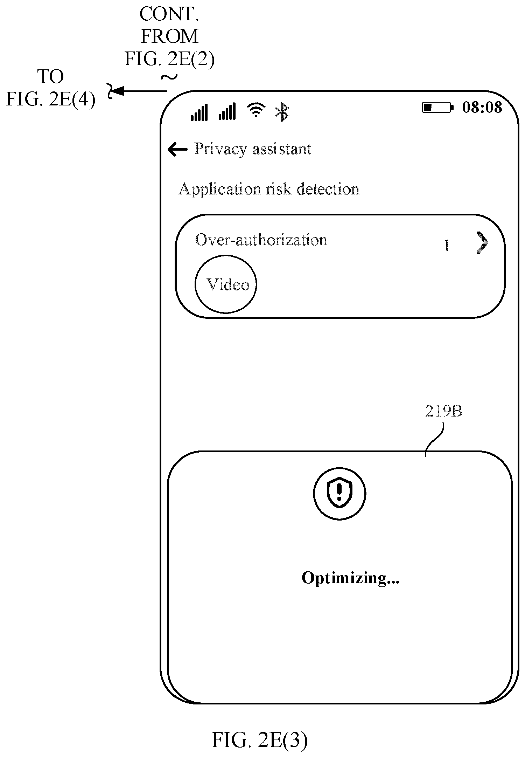

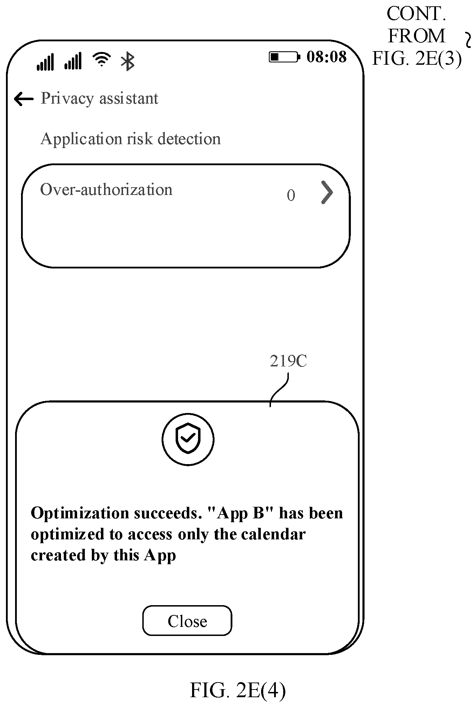

**FIG. 2E(1) to FIG. 2E(4)** **show a third operation method for managing a permission of an application to access the calendar application in Settings.**

FIG. 2E(1) is a privacy detail page that is opened through a privacy option in the setting application, and the privacy detail page may include, for example, a "Recommend to optimize" card 211, a card 212 used to view a privacy access record, a card 213 used to manage an application permission, and another card.

The user may trigger the electronic device to display a privacy assistant detail page by tapping the "Recommend to optimize" card 211. For details, refer to FIG. 2E(2).

FIG. 2E(2) is the privacy assistant detail page, and the privacy assistant detail page includes a risk detection result for an excessively authorized application, and when there is a risk of an application (for example, when an application frequently reads all calendars, it is considered that the application excessively obtains privacy information of the user), the privacy assistant detail page further displays prompt information 219A for recommending optimization. For example, the prompt information 219A may display prompt information "There is a risk of allowing the "application B" to read all calendars. It is recommended that only the calendar created by the application is accessed", and display a control 218A for immediate optimization and a control 218B for canceling optimization.

The user may tap the control 218A to enable the electronic device to modify the permission of the application B to access the calendar application to the permission corresponding to "Access only a calendar created by this App". Specifically, in response to an operation (which may also be referred to as a sixth operation) performed on the control 218A in FIG. 2E(2), the electronic device starts to optimize a permission level of the application A. For details, refer to prompt information 219B in FIG. 2E(3). In addition, optimization success prompt information is further output. For details, refer to FIG. 2E(4).

FIG. 2E(4) displays prompt information 219C that is used to prompt the user that optimization succeeds. For example, the prompt information 219C may display prompt information: "Optimization succeeds, and the "application B" has been optimized to: Access only a calendar created by this App".

**FIG. 2F(1) to FIG. 2F(4)** **show a fourth operation method for managing a permission of an application to access the calendar application in Settings.**

FIG. 2F(1) is a privacy detail page that is opened through a privacy option in the setting application, and the privacy detail page includes a "Recommend to optimize" card 211, a card 212 used to view a privacy access record, a card 213 used to manage an application permission, another card, and the like.

The user may view all the privacy access records by tapping a control of "All privacy access records" in the card 212 that is used to view the privacy access record. For details, refer to FIG. 2F(2).

FIG. 2F(2) is a detail page of all privacy access records. The detail page of all privacy access records may be used to display a record of accessing privacy information by each application, for example, includes a record of "App A reads all calendars", a record of "App A reads all calendars", and the like.

The user may tap a privacy access record of any application to modify a permission of the application to access corresponding privacy. For example, in response to an operation performed on a record of "App A reads calendar", jump to a privacy access record detail page of the application A. For details, refer to FIG. 2F(3).

FIG. 2F(3) is the privacy access record detail page of the application A, where the detail page records specific privacy record information such as a time and a quantity of times that the application A accesses various types of privacy information, for example, the application A reads all calendars 11 times before 15:10 today.

The user may modify the privacy access permission by tapping any piece of specific privacy record information. For example, after tapping on the privacy record information corresponding to "App A reads all calendars 11 times before 15:10 today" is detected, the electronic device is triggered to pop up a window that is used to set the permission level of the application A to access the calendar application. For details, refer to FIG. 2F(2). In this embodiment of this application, the interface shown in FIG. 2F(3) may also be referred to as a first interface, and the operation performed on the privacy record information corresponding to "App A reads all calendars 11 times before 15:10 today" in FIG. 2F(3) may also be referred to as a first operation.

A window is displayed in FIG. 2F(4). The window includes prompt information that is used to indicate an operation involved in the application A accessing the calendar application. The prompt information is, for example, allowing the "application A" to read a calendar, and further includes options corresponding to a plurality of permission levels for accessing the calendar application. The options include, for example, three options: "Access only a calendar created by this App", "Allow access to all calendars", and "Prohibit". The "Prohibit" option is in the selected state, which indicates that the permission of the current application A to access the calendar application is "prohibiting".

By tapping the "Access only a calendar created by this App" option, the user can change the permission level of the application A to access the calendar application from "Allow access to all calendars" to "Access only a calendar created by this App". In this embodiment of this application, the window displayed in FIG. 2F(4) may also be referred to as a first window, the application A included in the window may also be referred to as a first application, the prompt information of allowing the "application A" to read a calendar that is included in the window may also be referred to as access type information, "Allow access to all calendars" included in the window may also be referred to as a first permission, the option of "Allow access to all calendars" may also be referred to as a first option, "Access only a calendar created by this App" may also be referred to as a second permission, the option of "Access only a calendar created by this App" may also be referred to as a second option, "Prohibit" may also be referred to as a third permission, and the option of "Prohibit" may also be referred to as a third option. An operation performed on the first option may be referred to as a second operation, an operation performed on the second option may be referred to as a third operation, and an operation performed on the third option may be referred to as a fifth operation.

FIG. 2A(1) to FIG. 2F(4) show only examples of four operation methods for managing a permission of an application to access the calendar application in Settings, which should not constitute a limitation to this application. In addition, the permission of the application to access the calendar application may be managed in more other manners.

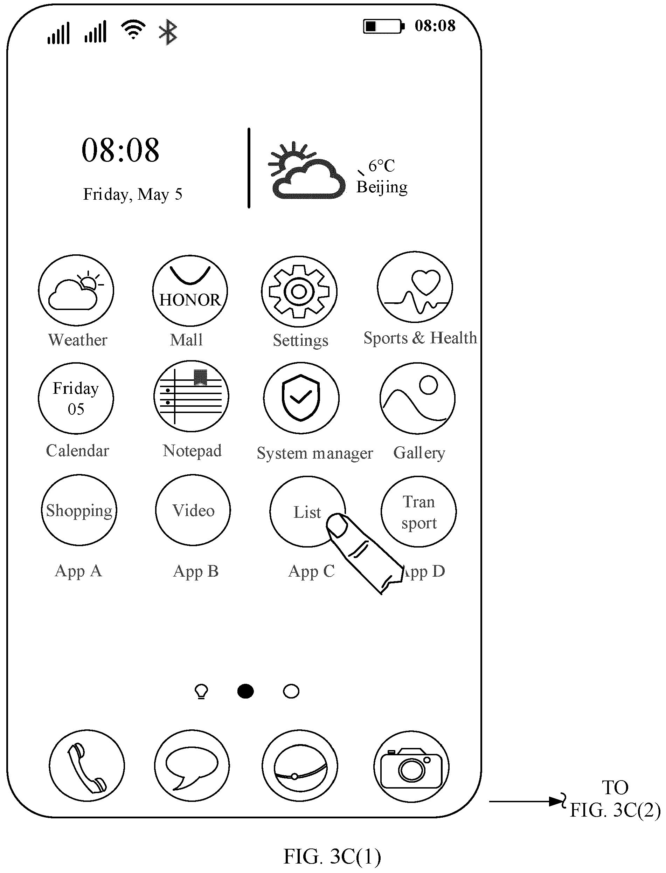

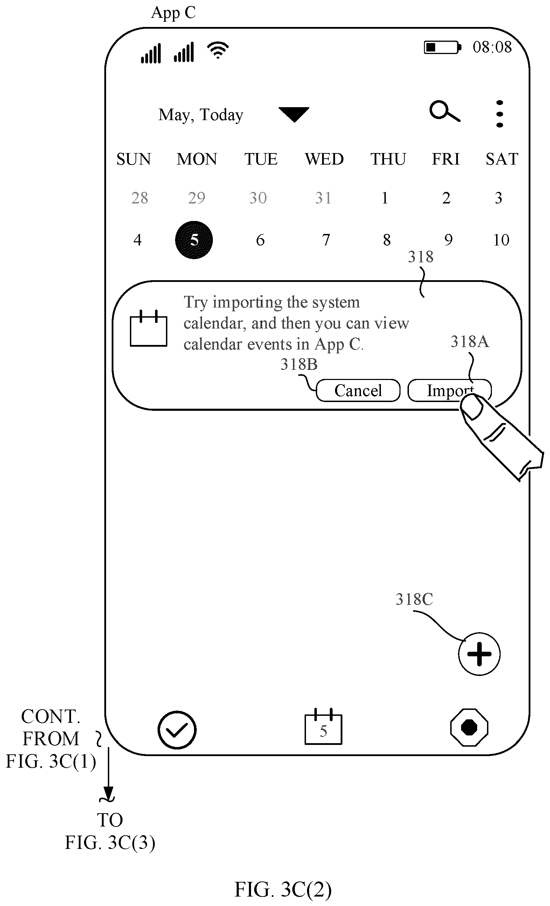

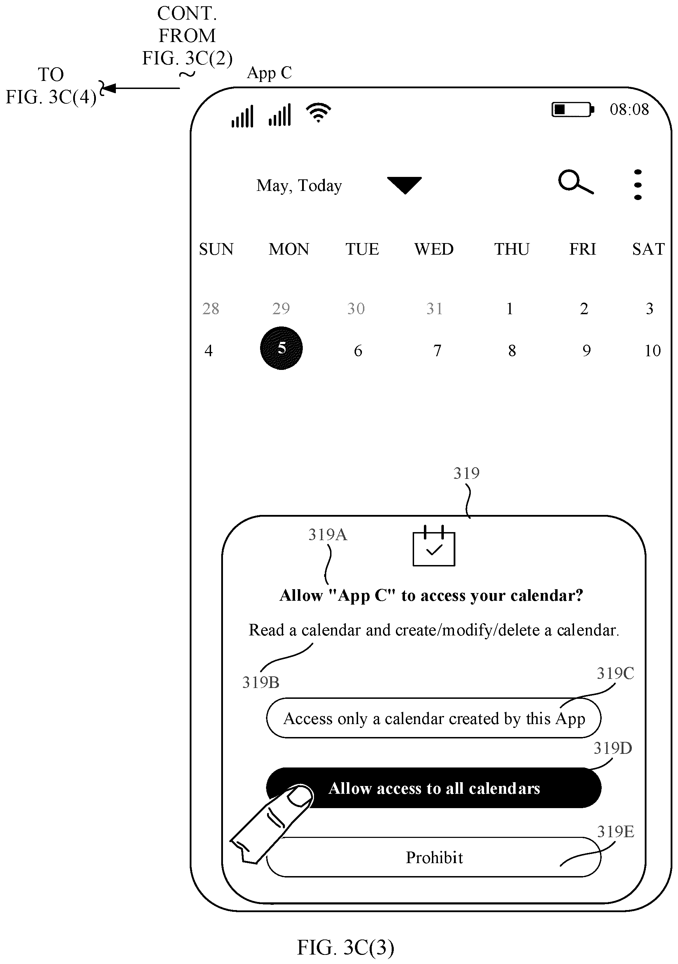

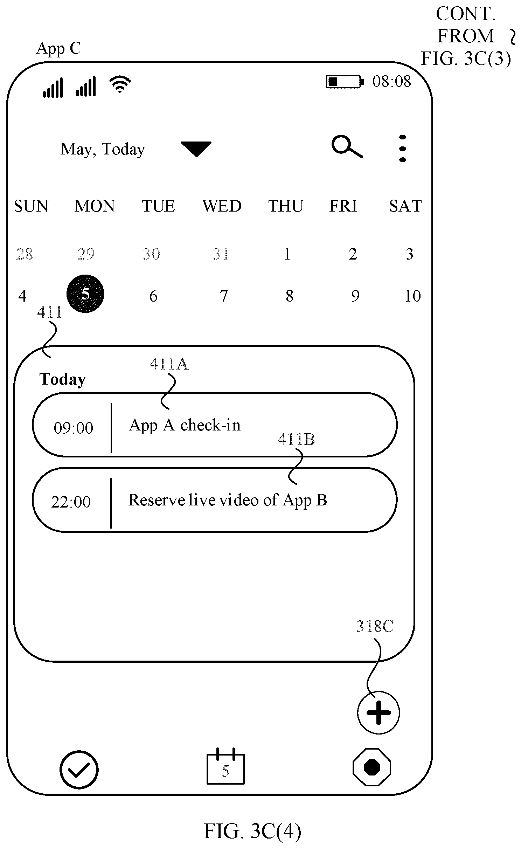

**FIG. 3A(1) to FIG. 3C(4)** **illustrate an example of a schematic diagram of a set of operation interfaces for managing a permission of an application to access a calendar application in the application.**

**FIG. 3A(1) to FIG. 3A(4)** **are a schematic diagram of an operation method for managing a permission of an application A to access the calendar application in the application.**

FIG. 3A(1) is a home screen of the electronic device, and the home screen may include icons of a plurality of applications, for example, an icon of the application A, an icon of an application B, an icon of an application C, an icon of an application D, and an icon of Settings.

The user may tap an icon of any application to trigger the electronic device to enable the application. For example, in response to an operation performed on the icon of the application A in FIG. 3A(1), the electronic device opens the application A and displays the interface provided by the application A. For details, refer to FIG. 3A(2).

FIG. 3A(2) is the interface of the application A, and the application A may be a shopping application. The interface of the application A may display a control 311 used for checking in, and may further display some goods that can be purchased by a user. This embodiment of this application sets no limitation on the interface of the application A.

The user may open the check-in interface by using the control 311. Generally, after the user opens the check-in interface, the electronic device may pop up information that prompts the user to start a calendar reminder, so that the application A creates a check-in reminder task in the calendar, to remind the user to check in in the application A.

FIG. 3A(3) includes a window 312. The window 312 displays prompt information for alerting the user to subscribe to a calendar reminder service, such as "Enable calendar reminder, check in every day to receive cash", and also displays a control 312A for immediate subscription and a control 312B for unsubscribing.

The user can use the control 312A to determine the service of "Subscribe to calendar reminder". Specifically, the electronic device is triggered, in response to an operation performed on the control 312A, to pop up a window in which the application A requests to obtain the permission to access the calendar application. For details, refer to FIG. 3A(4). In this embodiment of this application, the interface shown in FIG. 3A(3) may also be referred to as a first interface, and an operation performed on the control 312A shown in FIG. 3A(3) may also be referred to as a first operation.

FIG. 3A(4) includes a window 313, where the window 313 includes prompt information 313A used to request the user whether to allow the "application A" to access the calendar, and includes prompt information 313B indicating that accessing the calendar is specifically reading a calendar and creating/modifying/deleting a calendar, and options corresponding to three calendar access permission levels, that is, an option 313C corresponding to accessing only a calendar created by the application, an option 313D corresponding to allowing access to all calendars, and an option 313E corresponding to prohibiting.

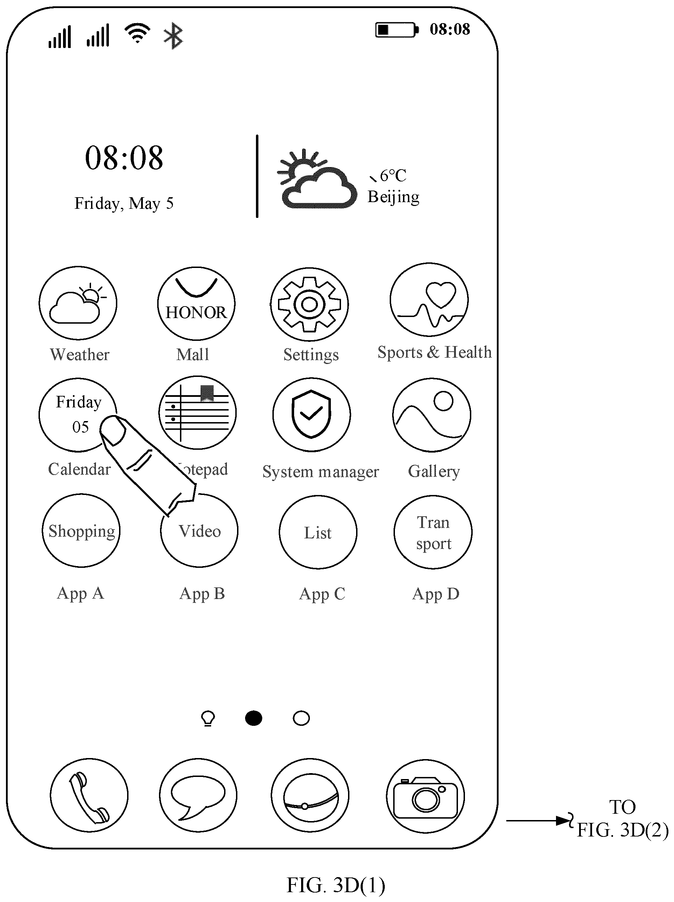

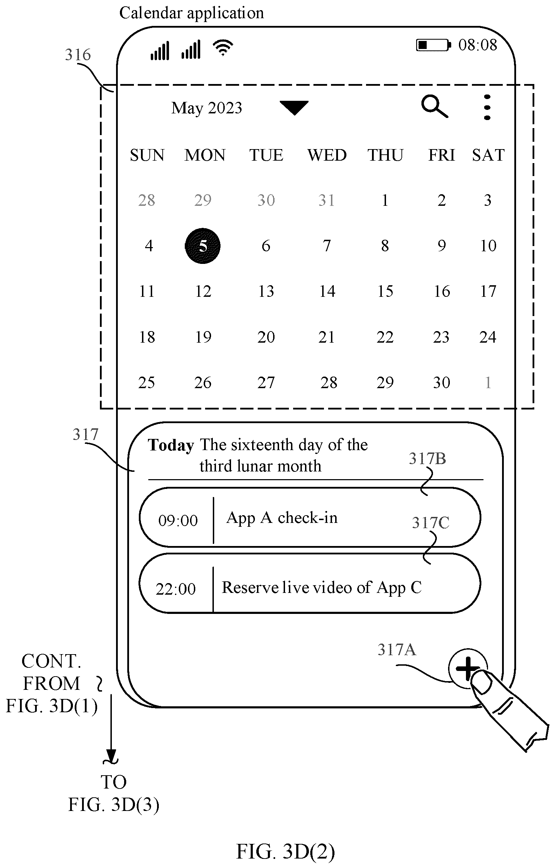

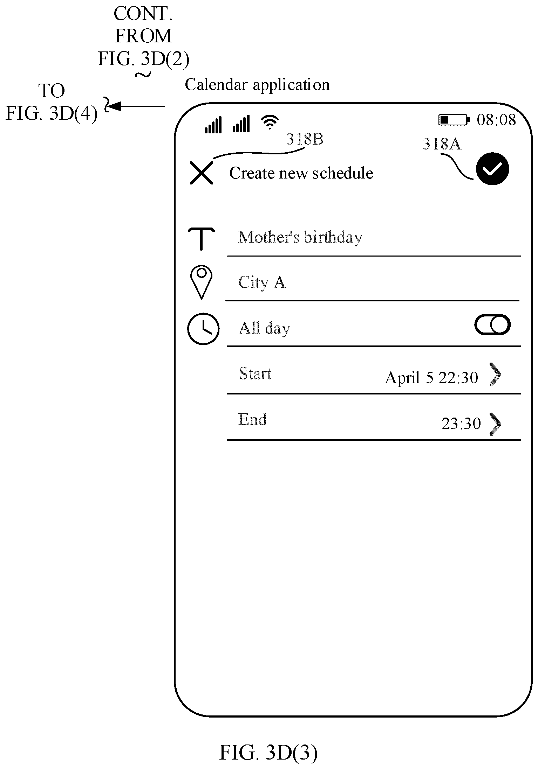

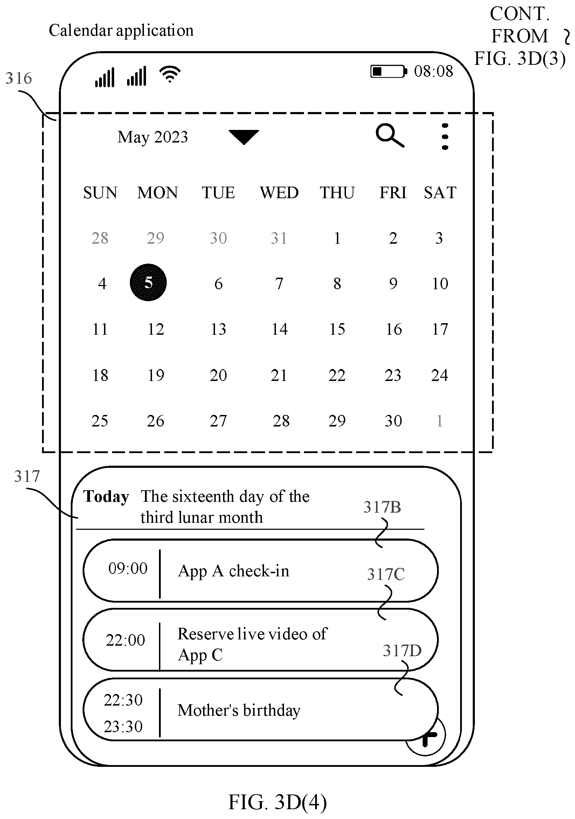

The user may trigger, by selecting any one of the foregoing three options in FIG. 3A(4), the electronic device to use a calendar access permission corresponding to the option for the application A. For example, in response to an operation performed on the option 313C, the calendar access permission of the application A includes a permission to create a schedule in the calendar application. Therefore, the calendar application may display schedule information corresponding to "App A check-in" created by the user by using the application A this time. For details, refer to the description of FIG. 3D(2) below.

In this embodiment of this application, the window 313 displayed in FIG. 3A(4) may also be referred to as a first window, the application A included in the window may also be referred to as a first application, the prompt information 313B of reading a calendar and creating/modifying/deleting a calendar that is included in the window 313 may also be referred to as access type information, "Allow access to all calendars" included in the window 313 may also be referred to as a first permission, the option of "Allow access to all calendars" may also be referred to as a first option, "Access only a calendar created by this App" may also be referred to as a second permission, the option of "Access only a calendar created by this App" may also be referred to as a second option, "Prohibit" may also be referred to as a third permission, and the option of "Prohibit" may also be referred to as a third option. An operation performed on the first option may be referred to as a second operation, an operation performed on the second option may be referred to as a third operation, and an operation performed on the third option may be referred to as a fifth operation.

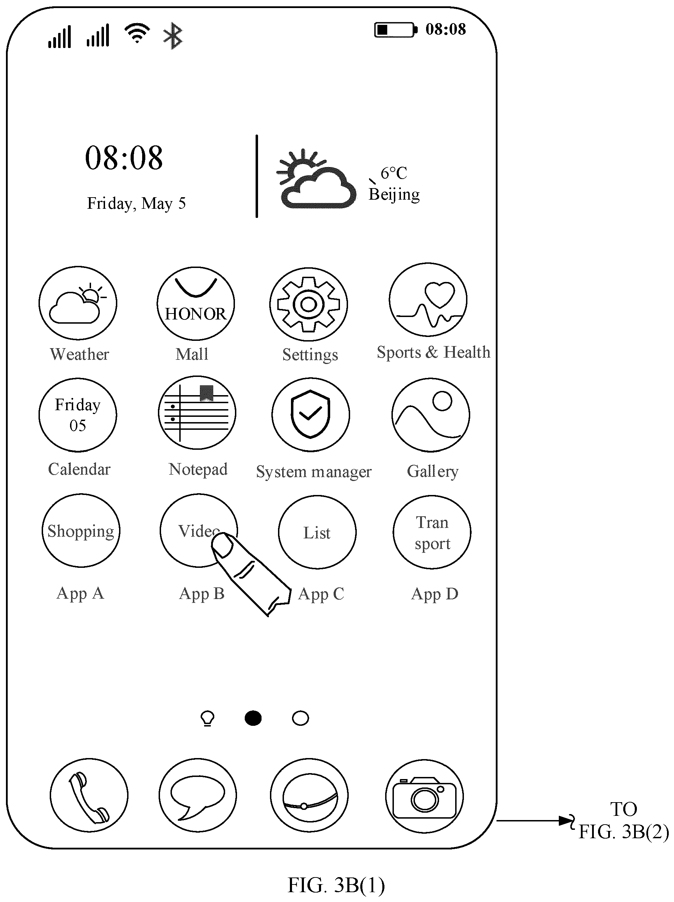

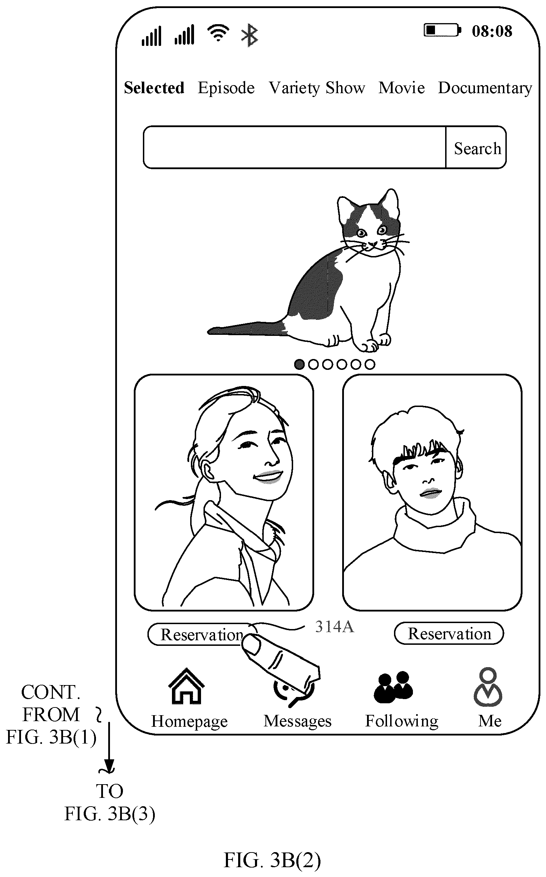

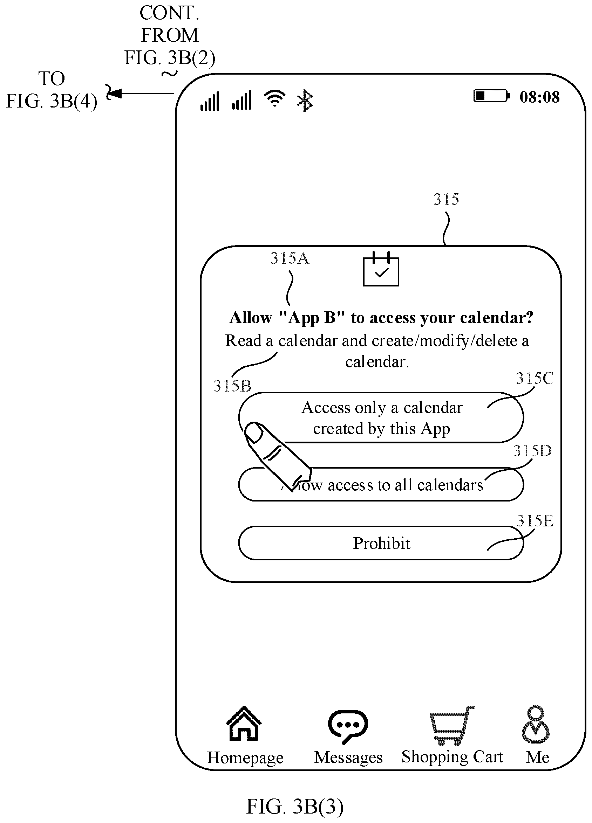

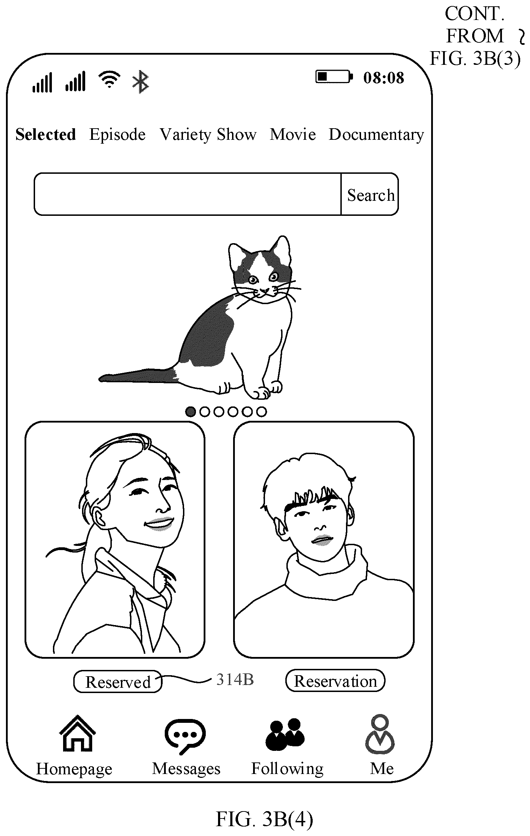

**FIG. 3B(1) to FIG. 3B(4)** **are a schematic diagram of an operation method for managing a permission of the application B to access the calendar application in the application.**

FIG. 3B(1) is a home screen of the electronic device, and the home screen may include icons of a plurality of applications, for example, the icon of the application A, the icon of the application B, the icon of the application C, the icon of the application D, and the icon of Settings.

The user may tap an icon of any application to trigger the electronic device to enable the application. For example, in response to an operation performed on the icon of the application B in FIG. 3B(1), the electronic device is triggered to open the application B and display the interface provided by the application B. For details, refer to FIG. 3B(2).

FIG. 3B(2) is the interface of the application B, and the application B may be a video application. The interface of the application B may display an icon 314A used to reserve a live video, and may further display some videos that can be viewed by a user. This embodiment of this application sets no limitation on the interface of the application B.

The user may reserve a live video by using the icon 314A. Generally, after the user acknowledges the reservation of the live video, the electronic device may pop up a window in which the application B requests to obtain a permission to access the calendar application. Only after the corresponding permission is obtained, the application B can create a schedule in the calendar, so as to remind the user to watch the live video. In this embodiment of this application, the interface shown in FIG. 3B(2) may also be referred to as a first interface, and an operation performed on the icon 314A shown in FIG. 3B(2) may also be referred to as a first operation.

FIG. 3B(3) includes a window 315, where the window 315 includes prompt information 315A used to request the user whether to allow the "application B" to access the calendar, and includes prompt information 315B indicating that accessing the calendar is specifically reading a calendar and creating/modifying/deleting a calendar, and options corresponding to three calendar access permission levels, that is, an option 315C corresponding to accessing only a calendar created by the application, an option 315D corresponding to allowing access to all calendars, and an option 315E corresponding to prohibiting.

The user may trigger, by selecting any one of the foregoing three options in FIG. 3B(3), the electronic device to use a calendar access permission corresponding to the option for the application B. For example, in response to an operation performed on the option 315C corresponding to accessing only a calendar created by the application, the electronic device controls that the application B can only access (read and add/modify/delete) a schedule created by the application B in the calendar application, and cannot access (read and add/modify/delete) a schedule created by another application or the calendar application itself in the calendar application. In this embodiment of this application, the window 315 displayed in FIG. 3B(3) may also be referred to as a first window, the application B included in the window may also be referred to as a first application, the prompt information 315B of reading a calendar and creating/modifying/deleting a calendar that is included in the window 315 may also be referred to as access type information, "Allow access to all calendars" included in the window 315 may also be referred to as a first permission, the option of "Allow access to all calendars" may also be referred to as a first option, "Access only a calendar created by this App" may also be referred to as a second permission, the option of "Access only a calendar created by this App" may also be referred to as a second option, "Prohibit" may also be referred to as a third permission, and the option of "Prohibit" may also be referred to as a third option. An operation performed on the first option may be referred to as a second operation, an operation performed on the second option may be referred to as a third operation, and an operation performed on the third option may be referred to as a fifth operation.

FIG. 3B(4) is an interface of the application B. After the user has allowed the application B to access the calendar application, the interface changes from the icon 314A used to reserve a video to an icon 314B of "Reserved". In addition, in response to an operation performed on the option 315C, the calendar access permission of the application B includes a permission to create a schedule in the calendar application. Therefore, the calendar application may display schedule information corresponding to "Reserve live videos of the application B" created by the user this time by using the application B. For details, refer to the description of FIG. 3D(2) below.

**FIG. 3C(1) to FIG. 3C(4)** **are a schematic diagram of an operation method for managing a permission of the application C to access the calendar application in the application.**

FIG. 3C(1) is a home screen of the electronic device, and the home screen may include icons of a plurality of applications, for example, the icon of the application C.

The user may tap an icon of any application to trigger the electronic device to enable the application. For example, in response to an operation performed on the icon of the application C in FIG. 3C(1), the electronic device is triggered to open the application C and display the interface provided by the application C. For details, refer to FIG. 3C(2).

FIG. 3C(2) is the interface of the application C, the application C may be a schedule management application, and the interface of the application C may display a calendar and a window 318. The window 318 displays information that is used to prompt the user to import the calendar application. For example, the prompt information is "Try importing the calendar application, so a calendar event can be viewed in the application C". The interface further displays an icon 318A used for importing, an icon 318B used for cancelling, a control 318C used for creating a schedule in the application C, and the like.

The user can import the schedule in the calendar application into the application C by using the icon 318A. For example, in response to an operation performed on the icon 318A, the electronic device displays the user interface shown in FIG. 3C(3). In this embodiment of this application, the interface shown in FIG. 3C(2) may also be referred to as a first interface, and an operation performed on the icon 318A shown in FIG. 3C(2) may also be referred to as a first operation.

FIG. 3C(3) is still an interface of the application C, and a window 319 is displayed. The window 319 includes prompt information 319A used to request whether the user whether to allow the "application C" to access the calendar, and includes prompt information 319B indicating that accessing the calendar is specifically, for example, reading a calendar and creating/modifying/deleting a calendar, and options corresponding to three calendar access permission levels, that is, an option 319C corresponding to accessing only a calendar created by the application, an option 319D corresponding to allowing access to all calendars, and an option 319E corresponding to prohibiting.

The user may trigger, by selecting any one of the foregoing three options in FIG. 3D(3), the electronic device to use a calendar access permission corresponding to the option for the application C. For example, in response to an operation performed on the option 319C corresponding to allowing access to all calendars, the application B can access (read) schedules created by all applications in the calendar application, and the application C may further display schedule information obtained from the calendar application in the application C. For details, refer to FIG. 3C(4). In this embodiment of this application, the window 319 displayed in FIG. 3C(3) may also be referred to as a first window, the application C included in the window may also be referred to as a first application, the prompt information 319B of reading a calendar and creating/modifying/deleting a calendar that is included in the window 319 may also be referred to as access type information, "Allow access to all calendars" included in the window 319 may also be referred to as a first permission, the option of "Allow access to all calendars" may also be referred to as a first option, "Access only a calendar created by this App" may also be referred to as a second permission, the option of "Access only a calendar created by this App" may also be referred to as a second option, "Prohibit" may also be referred to as a third permission, and the option of "Prohibit" may also be referred to as a third option. An operation performed on the first option may be referred to as a second operation, an operation performed on the second option may be referred to as a third operation, and an operation performed on the third option may be referred to as a fifth operation.

In FIG. 3C(3), an example in which the application C requests to read a calendar and write a calendar is merely used to show a management interface for managing a permission of the application C to access the calendar. Because the application C is a schedule management application, the application C may have relatively complete functions of creating a calendar, managing a calendar, and the like, so that a calendar created by the application C may be directly written to a local end without being synchronized to the calendar application. Therefore, the application C may apply for only the permission to read a calendar, and does not need to apply for the permission to write a calendar. In this case, when the application C detects an operation on the icon 318A as shown in FIG. 3C(2), the management window that is used to manage the permission of the application C to access the calendar and that is popped up by the electronic device may be the window shown in a-2 in FIG. 1. For details, refer to the foregoing description of a-2 in FIG. 1. Correspondingly, the foregoing operation performed on the option 319C corresponding to allowing access to all calendars in FIG. 3C(3) corresponds to the operation performed on the option corresponding to allowing access to the calendar in a-2 in FIG. 1.

FIG. 3C(4) is still an interface of the application C (which may also be referred to as a third interface). In this case, a window 411 is displayed in this interface, and all schedules of the application C in the calendar application are displayed in the window 411, for example, schedule information 411A corresponding to "App A check-in" and schedule information 411B corresponding to "Reserve live videos in the application B". The schedule information 411A is a schedule created by the application A in the calendar application after the calendar access permission is granted to the application A described in FIG. 3A(1) to FIG. 3A(4), and the schedule information 411B is a schedule created by the application B in the calendar application after the calendar access permission is granted to the application B described in FIG. 3B(1) to FIG. 3B(4).

FIG. 3D(1) to FIG. 3D(4) illustrate an example of an operation method of creating a schedule in the calendar application.

FIG. 3D(1) is a home screen of an electronic device, and the home screen may include icons of a plurality of applications, for example, an icon of Calendar.

The user may tap an icon of any application to trigger the electronic device to enable the application. For example, in response to an operation performed on the icon of Calendar in FIG. 3E(1), the electronic device is triggered to open the calendar application and display an interface provided by the calendar application. For details, refer to FIG. 3D(2).

FIG. 3D(2) is an interface of Calendar, and the interface of Calendar may display a calendar 316 and a window 317. An icon 317A for creating a new schedule and schedule reminder information are displayed in the window 317. The schedule reminder information includes, for example, schedule information 317B corresponding to the schedule "Reserve live videos in the application B" created by the application A in the calendar application after the application A is granted the calendar access permission described in FIG. 3A(1) to FIG. 3A(4), and schedule information 317C created by the application B in the calendar application after the application B is granted the calendar access permission described in FIG. 3B(1) to FIG. 3B(4). In this embodiment of this application, the interface of the calendar application shown in FIG. 3D(2) may also be referred to as a fifth interface. The schedule information 317B of the application A and the schedule information 317C of the application B may also be referred to as a first schedule.

The user can create a schedule by using the icon 317A for creating a new schedule. For example, the electronic device displays the user interface shown in FIG. 3D(3), in response to selecting a day in the calendar 316, for example, May 5, and an operation acting on the icon 317A for creating a new schedule.

FIG. 3D(3) is a schedule create detail page, that is, a to-be-edited page used to create a new schedule. The schedule create detail page may include an OK icon 318A, a Cancel icon 318B, a page title such as New schedule, a title item, a location item, and a time item. The OK icon 318A may be used to determine an edited to-do event, and the Cancel icon 318B may be used to close the to-be-edited page. The title item may be used for receiving a title of a to-do event entered by the user. The location item may be used for receiving a place of the to-do event entered by the user. The time item may be used for receiving a start time and an end time of the to-do event entered by the user.

After editing the schedule information, the user may complete creation of the schedule by using the OK icon 318A. For example, in response to an operation performed on the OK icon 318A in FIG. 3D(3), the electronic device is triggered to display the schedule information shown in FIG. 3D(4). In this embodiment of this application, the operation of creating a schedule shown in FIG. 3D(2) and FIG. 3D(3) may also be referred to as a fourth operation.

In addition to the schedule information317B and the schedule information 317C, the schedule reminder information displayed in FIG. 3D(4) further displays schedule information 317D (which may also be referred to as a second schedule) corresponding to Mother's birthday directly created in the calendar application this time.

Optionally, after the user creates the schedule of the birthday reminder shown in FIG. 3D(1) to FIG. 3D(4) in the calendar application, if some shopping applications such as the foregoing application A have a permission to read all calendars, the application A may obtain the schedule of the birthday reminder, and the application A recommends a birthday gift for the user in the interface of the application A. For details, refer to the scenario shown in FIG. 3E(1) and FIG. 3E(2).

FIG. 3E(1) and FIG. 3E(2) illustrate an example scenario in which the application A recommends a corresponding service based on a schedule read from the calendar application.

As shown in FIG. 3E(1), the user creates a schedule of Mother's birthday by using the calendar application at 08:08. As shown in FIG. 3E(2), at a later time, for example, at 09:30, the user opens the application A, and the interface of the application A displays commodity push information such as "Birthday gift list", which is used to recommend the user to purchase a birthday gift. The interface of the application A shown in FIG. 3E(2) may also be referred to as a second interface.

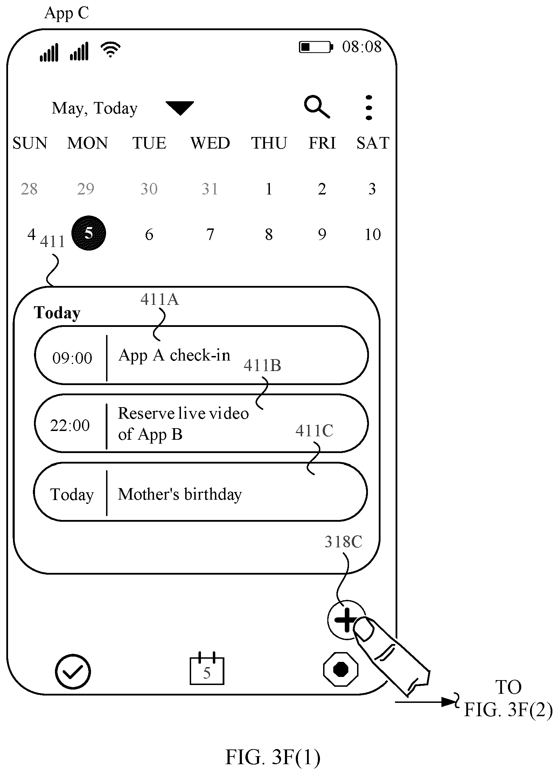

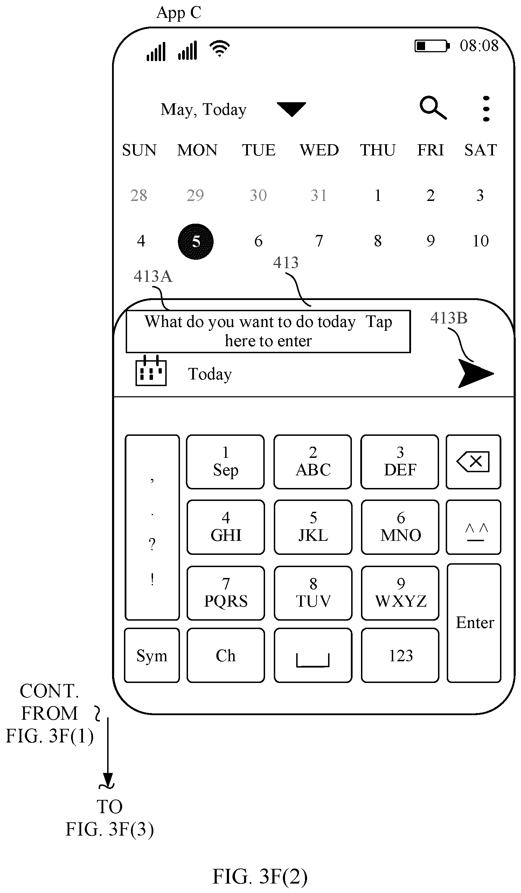

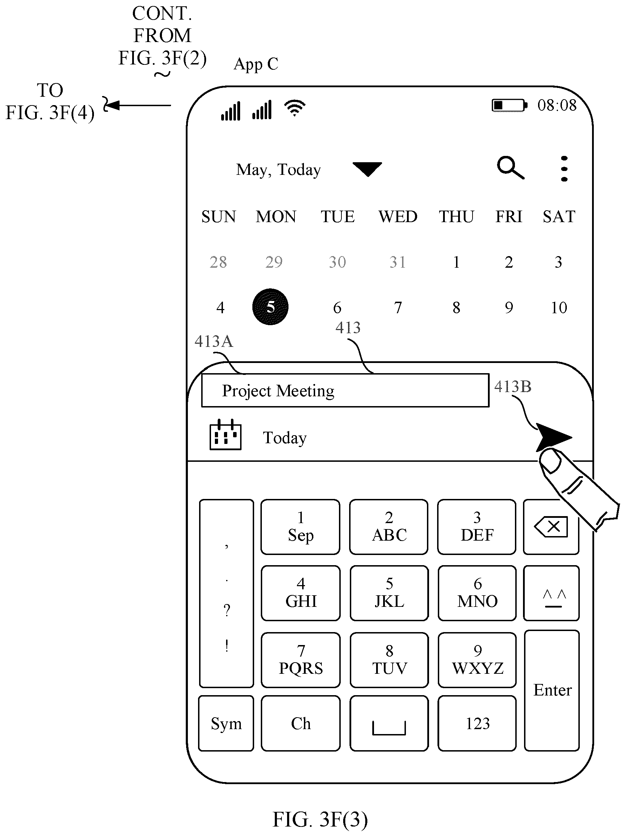

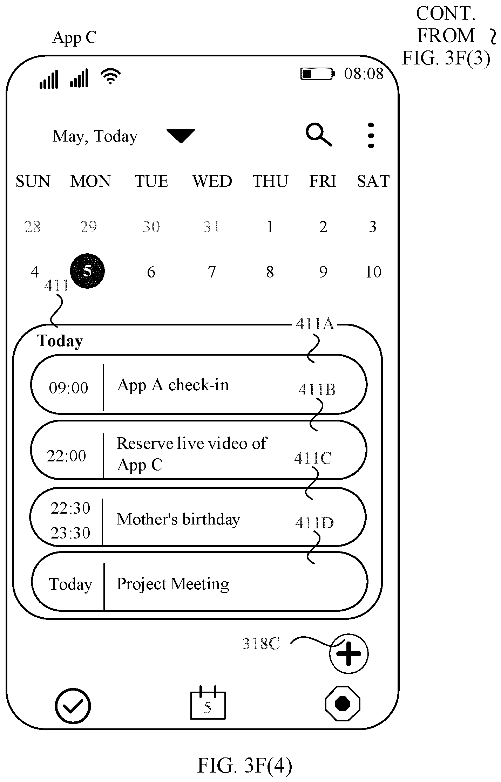

FIG. 3F(1) to FIG. 3F(4) illustrate an example of an operation method of creating a schedule in the application C.

FIG. 3F(1) is an interface of the application C, and a window 411 is displayed on the interface. The window 411 displays schedule information 411A corresponding to "App A check-in" that is previously read from the calendar application, schedule information 411B corresponding to "Reserve live videos of the application B", and schedule information 411C corresponding to Mother's birthday directly created by the user in the calendar application.

The user can create a schedule in the application C through an operation on the control 318C in FIG. 3F(1). For example, in response to the operation on the control 318C, the application C displays a window 413 for creating a schedule. For details, refer to FIG. 3F(2).

FIG. 3F(2) is still an interface of the application C. In this case, a window 413 is displayed on the interface, and an input box 413A for displaying a schedule title and a control 413B for completing schedule creation are displayed on the window 413.

The user may enter the title of the to-do schedule by operating a keyboard, and correspondingly the electronic device may display a corresponding schedule title according to an operation performed by the user on the keyboard, for example, display the title "Project Meeting" shown in FIG. 3F(3). After entering the schedule title, the user can further tap the control 413B to complete creation of this schedule. For example, in response to an operation on the control 413B, the user successfully creates a "Project Meeting" schedule in the application C, and the application C further displays information about the schedule. For details, refer to content shown in FIG. 3F(4).

FIG. 3F(4) is still an interface of the application C. In this case, a window 411 is displayed in the interface. In addition to the schedule information 411A corresponding to "App A check-in" that is previously read from the calendar application, the schedule information 411B corresponding to "Reserve live videos of the application B", and the schedule information 411C corresponding to Mother's birthday directly created by the user in the calendar application, the window 411 further displays schedule information 411D corresponding to the project meeting that is directly created by the user in the application C this time.

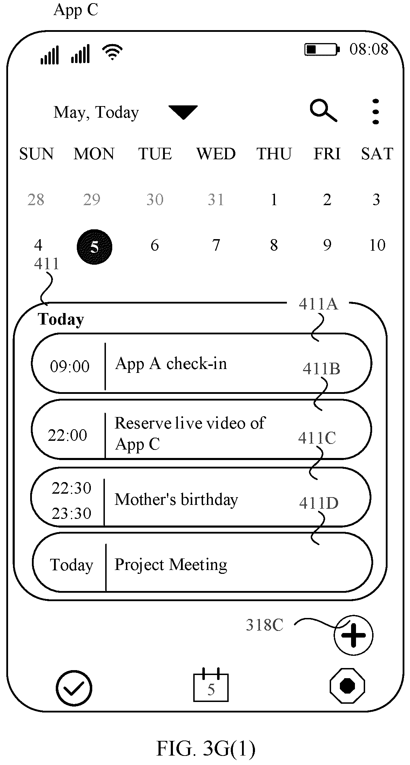

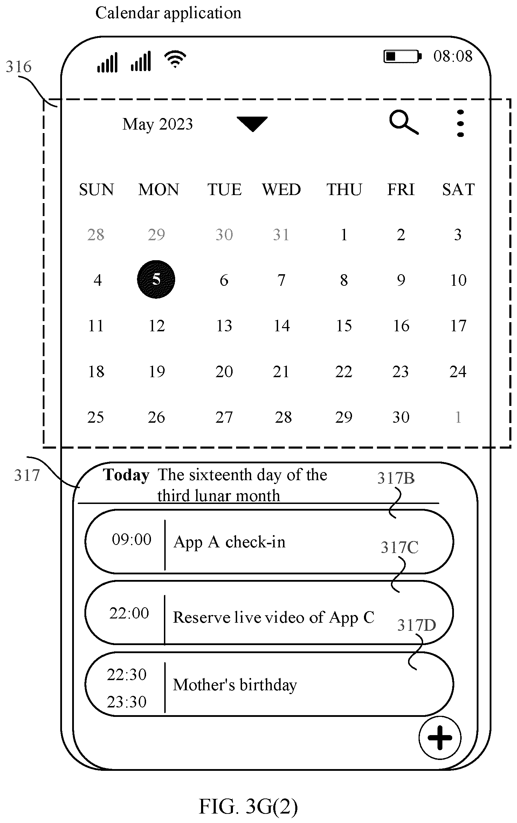

Optionally, the schedule information corresponding to the project meeting created by the user in the application C described in FIG. 3F(1) to FIG. 3F(4) may be stored in data of the application C. When the application C has only the permission to read the calendar and does not have the permission to write a calendar (create/modify/delete a calendar in the calendar application), the schedule information corresponding to the project meeting created by the user in the application C is not synchronously stored in a database of the calendar application, and is not displayed on the interface of the calendar application. For details, refer to FIG. 3G(1) and FIG. 3G(2).

When the application C has the permission to write a calendar (create/modify/delete a calendar in the calendar application), the schedule information corresponding to the project meeting created by the user in the application C may be synchronously stored in the database of the calendar application, and may be further displayed in the interface of the calendar application. This specifically depends on whether the application C itself requires to synchronize the schedule created at the local end to the calendar application. This is not limited in this application.

As shown in FIG. 3G(1) and FIG. 3G(2), in an example in which the application C does not have the permission to write a calendar, or the application C has the permission to write a calendar but does not require to synchronize the schedule of the application C to the calendar application, the schedule information of the project meeting created by the user is provided only by the application C, and the calendar application does not provide the schedule information of the project meeting.

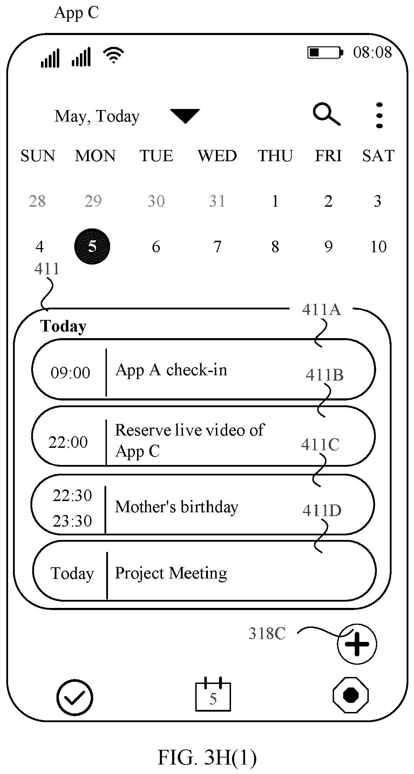

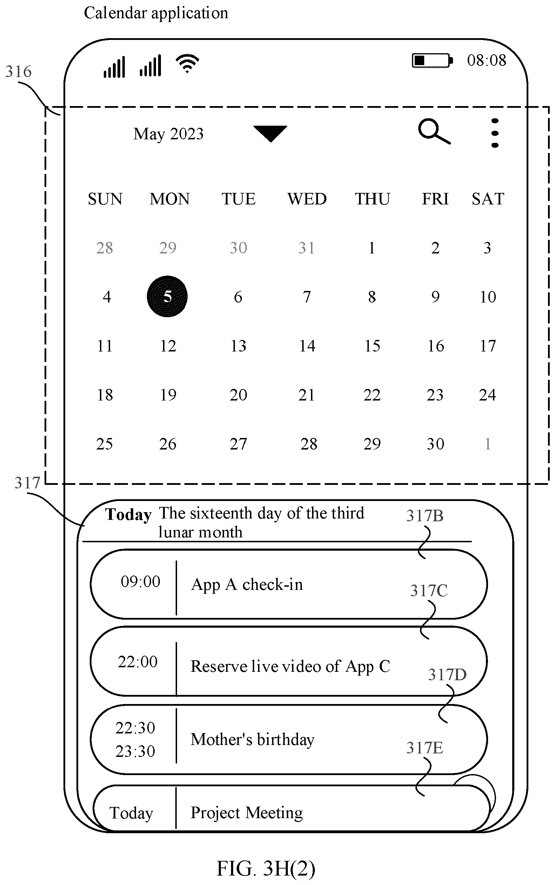

As shown in FIG. 3H(1) and FIG. 3H(2), in an example in which the application C has the permission to write a calendar and requires to synchronize the schedule of the application C to the calendar application, the schedule information of the project meeting created by the user is not only provided by the application C, but also the schedule information 317E of the project meeting is provided synchronously in the calendar application.

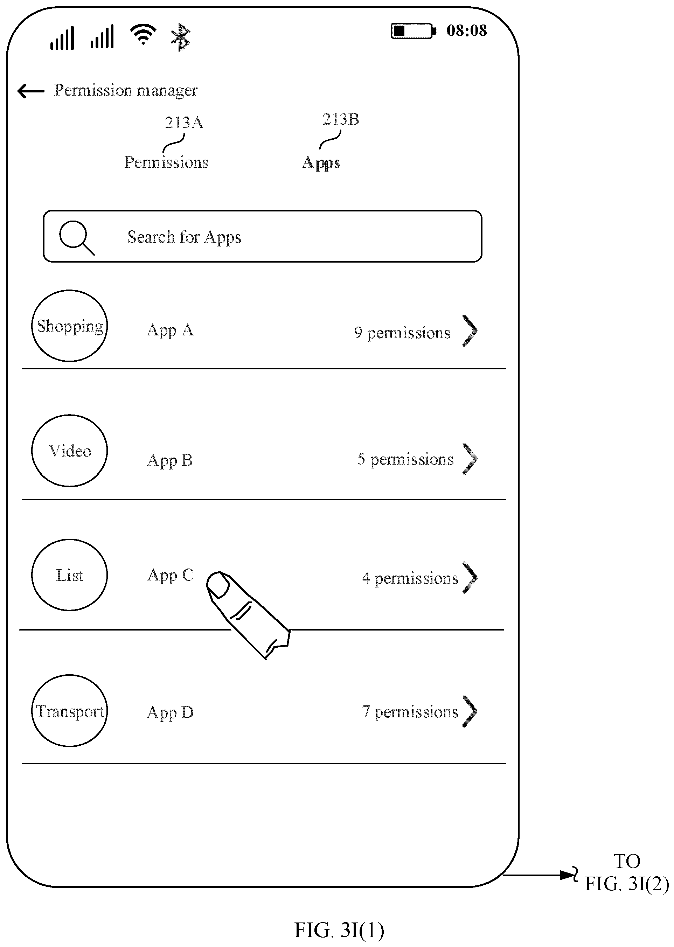

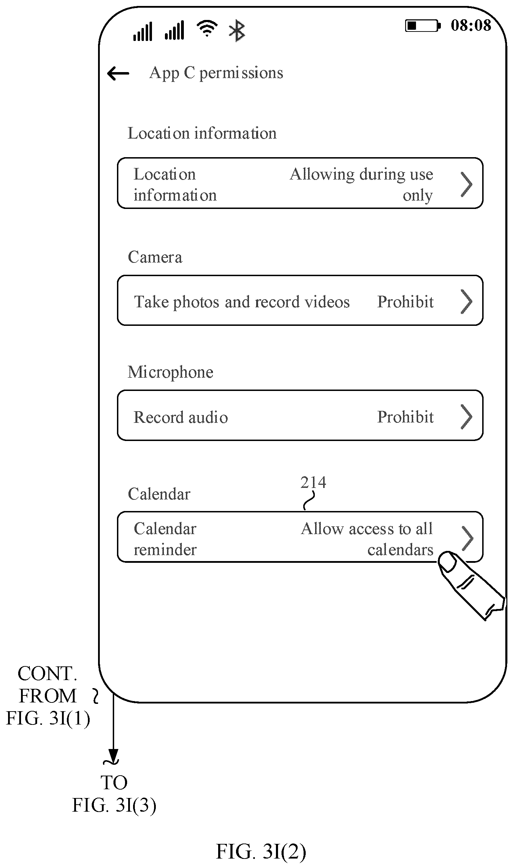

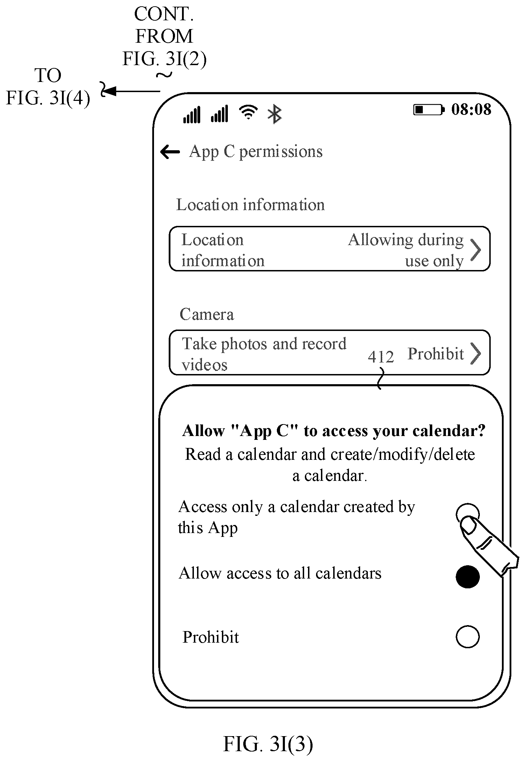

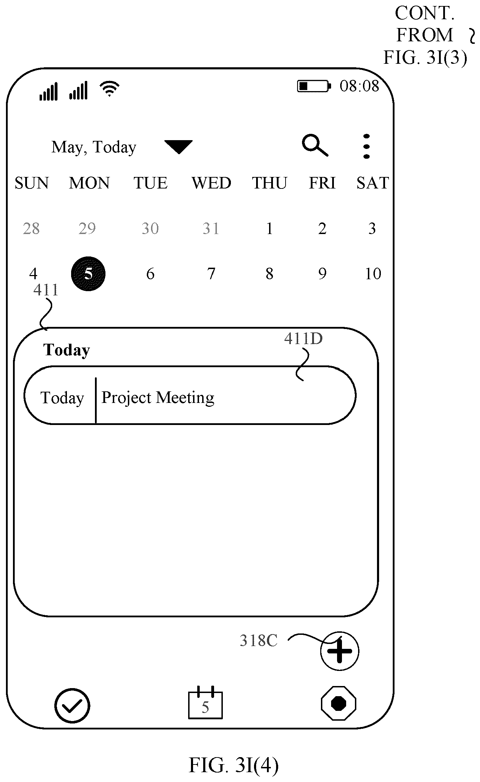

After the user grants the application C the permission to access all calendars, if the user wants to change the permission of the application C to access the calendar application, the user may modify the permission in Settings. For an operation method of modifying the permission of the application C to access the calendar application in Settings, refer to the foregoing four manners shown in the examples in FIG. 2A(1) to FIG. 2F(4). FIG. 3I(1) to FIG. 3I(4) are merely described in the following in one manner.

FIG. 3I(1) to FIG. 3I(4) illustrate an example of a schematic diagram of operation interfaces for changing the permission of the application C to access the calendar application.

FIG. 3I(1) is a permission management detail page. The permission management detail page includes a permission column 213A and an application column 213B. The user can select the permission column 213A or the application column 213B to trigger the electronic device to display a series of options corresponding to the selected column in the permission management detail page. For example, when the application column 213B shown in FIG. 3I(1) is selected, a series of application options are displayed in the permission management detail page, including an option corresponding to the application A, an option corresponding to the application B, an option corresponding to the application C, an option corresponding to the application D, and the like.

The user may further trigger, by selecting an option corresponding to any application, the electronic device to display an application permission detail page corresponding to the selected application. For example, in response to an operation performed on the option corresponding to the application C in FIG. 3I(1), the electronic device is triggered to open the permission detail page of the application C. For details, refer to FIG. 3I(2).

FIG. 3I(2) is the permission detail page of the application C, and the permission detail page of the application C includes a plurality of permission setting options, such as a permission setting option 214 corresponding to Calendar, a permission setting option corresponding to Location information, a permission setting option corresponding to Camera, and a permission setting option corresponding to Microphone. Each permission option further displays a permission level that is being used by the current permission. For example, the permission setting option 214 corresponding to Calendar displays "Allow access to all records", which represents that a current calendar permission owned by the application C is that the application C can access schedules created by all applications in the calendar application.

The user may further manage a calendar permission owned by the application A by tapping the permission setting option 214 corresponding to Calendar. In response to an operation performed on the permission setting option 214 corresponding to Calendar in FIG. 3I(2), the electronic device is triggered to pop up a window for setting the permission level of the application C to access the calendar application, as shown in FIG. 3I(3). In this embodiment of this application, the interface shown in FIG. 3I(2) may also be referred to as a first interface, and an operation performed on the permission setting option 214 corresponding to Calendar shown in FIG. 3I(2) may also be referred to as a first operation.

FIG. 3I(3) is still a permission detail page of the application C, and in this case, the permission detail page of the application C displays a window 412. The window 412 includes prompt information that is used to indicate an operation involved in the application C accessing the calendar. The prompt information is, for example, allowing the application C to read a calendar and create/modify/delete a calendar, and further includes options corresponding to a plurality of permission levels for accessing the calendar. The options include, for example, three options: "Access only a calendar created by this App", "Allow access to all calendars", and "Prohibit". The "Allow access to all calendars" option is in the selected state, representing that the permission of the current application C to access the calendar application is "Allow access to all calendars".

By tapping the "Access only a calendar created by this App" option, the user can change the permission level of the application C to access the calendar application from "Allow access to all calendars" to "Access only a calendar created by this App". For example, in response to an operation performed on "Access only a calendar created by this App" in FIG. 3I(3), the electronic device is triggered to change the permission level of the application C to access the calendar application to "Access only a calendar created by this App", so that the schedule information in the calendar application previously obtained by the application C is cleared. For details, refer to FIG. 3I(4). In this embodiment of this application, the window 412 displayed in FIG. 3I(3) may also be referred to as a first window, the application C included in the window may also be referred to as a first application, the prompt information of reading a calendar and creating/modifying/deleting a calendar that is included in the window 412 may also be referred to as access type information, "Allow access to all calendars" included in the window 412 may also be referred to as a first permission, the option of "Allow access to all calendars" may also be referred to as a first option, "Access only a calendar created by this App" may also be referred to as a second permission, the option of "Access only a calendar created by this App" may also be referred to as a second option, "Prohibit" may also be referred to as a third permission, and the option of "Prohibit" may also be referred to as a third option. An operation performed on the first option may be referred to as a second operation, an operation performed on the second option may be referred to as a third operation, and an operation performed on the third option may be referred to as a fifth operation.

Similarly, in FIG. 3I(3), an example in which the application C requests to read a calendar and write a calendar is merely used to show a management interface for managing a permission of the application C to access the calendar. When the application C requests only the permission to read a calendar, and does not need to apply for the permission to write a calendar, after the application C detects an operation on the permission setting option 214 corresponding to the calendar as shown in FIG. 3I(2), the management window that is used to manage the permission of the application C to access the calendar and that is popped up by the electronic device may be the window shown in a-2 in FIG. 1. For details, refer to the foregoing description of a-2 in FIG. 1. Correspondingly, the foregoing operation on the option corresponding to "Access only a calendar created by this App" in FIG. 3I(3) corresponds to the operation on the option corresponding to "Prohibit" in a-2 in FIG. 1.

FIG. 3I(4) is an interface of the application C (which may also be referred to as a fourth interface). A difference between this interface and the interface shown in FIG. 3E(1) is that, because the application C cannot read a schedule in the calendar application, schedule information in the calendar application is no longer displayed on the interface, and only the schedule information 411D corresponding to the project meeting created by the application C is displayed.

It may be understood that the operation method for managing a permission of each application to access the calendar application in Settings described in the foregoing UI embodiment is merely an example, and the operation method for managing a permission of an application to access the calendar application in the application is merely an example, which should not constitute a limitation to this application. For example, in Settings, an operation step of managing an application accessing the calendar application may be more complex or simpler than those described in FIG. 2A(1) to FIG. 2F(4). This is not limited in this application. For example, in different applications, operations of triggering management of a permission of the application to access the calendar application are different. For example, the triggering operation in a shopping application (application A) is to subscribe to a calendar reminder to check in to receive a red envelope, a triggering operation in a video application (application B) is to reserve a program to remind a user to watch the program by using a calendar, and a triggering operation in a schedule management application (application C) is to authorize the import of the calendar application. This application will not list all applications one by one.

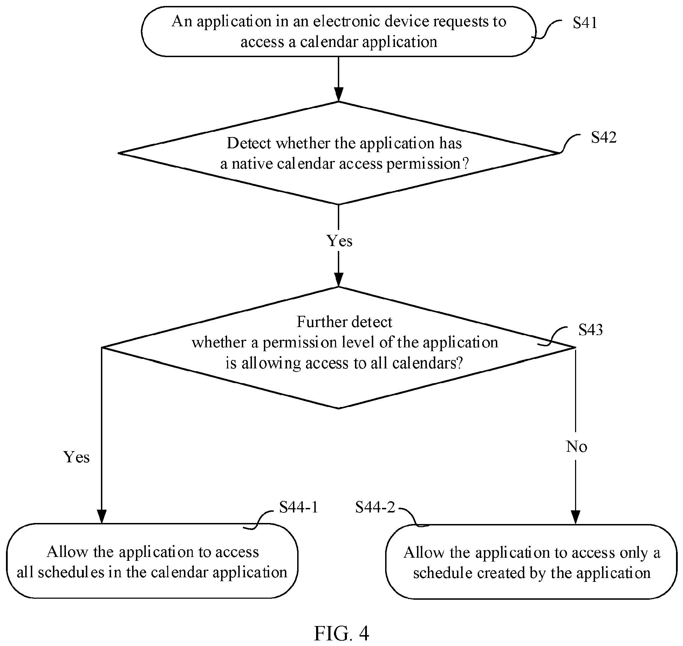

The following describes the permission management method provided in this application with reference to FIG. 4. The method includes the following steps:

**S41. An application in an electronic device requests to access a calendar application.**

Specifically, a system application or a third-party application in the electronic device may request to access the calendar application, and an operation of triggering the application in the electronic device to request to access the calendar application includes but is not limited to the following:
In a possible implementation, the triggering operation may be an operation of starting the application for the first time. Specifically, for some applications, when the application is run for the first time, the application requests to obtain corresponding permissions, including a permission to access the calendar application.

In another possible implementation, the triggering operation may be an operation of enabling a calendar reminder function provided in the application in a process of running the application, for example, an operation of subscribing to a calendar reminder in the application A described in FIG. 3A(1) to FIG. 3A(4), an operation of reserving a program described in FIG. 3B(1) to FIG. 3B(4), and an operation of enabling the import of the calendar application described in FIG. 3C(1) to FIG. 3C(4). When the application is another type of application, the triggering operation may be in another form, and details are not described herein again.

In S41, accessing the calendar application may refer to performing a read operation on a schedule in the calendar application, or may refer to performing a schedule write operation on the calendar application. Specifically, "read" refers to reading a schedule stored in the calendar application, and "write" refers to creating a schedule and modifying/deleting a schedule in the calendar application.

**S42. The electronic device detects whether the application has a native calendar access permission.**

The native calendar access permission specifically refers to a native calendar read permission and a native calendar write permission. The native calendar access permission is a rough permission, and the native calendar access permission includes only two permission levels, that is, "Allow access to the calendar" and "Prohibit access to the calendar". When a native calendar access permission of an application is "Allow access to the calendar", it represents that the application has the native access permission and can access all calendars. When a native calendar access permission of an application is "Prohibit access", it represents that the application does not have the native access permission and cannot access any calendar.

Specifically, the electronic device may preset native calendar access permissions of installed applications. When an application requests to access the calendar application, the electronic device may detect whether the application has a native calendar access permission. When the application has the native calendar access permission, the electronic device continues to execute subsequent S43, that is, further finely determine a permission level of the calendar access permission of the application.

A method for setting, by the electronic device, a native calendar access permission of an application includes the following manners.

In a possible implementation, the electronic device may set, by default, that all applications have native calendar access permissions, or have no native calendar access permission.

In another possible implementation, the electronic device may pop up prompt information that is used to request the calendar access permission, so that the user can manage the native access permission of the application by using the prompt information. Alternatively, a setting item in the application in the electronic device may provide an option for managing the native access permission of the application, so that the user can manage the native access permission of the application by using the native access permission option. Details are not described in this embodiment of this application.

**S43. The electronic device further detects whether a permission level of the application is allowing access to all calendars.**

Specifically, in this application, a refined distinction in permission levels is made for the permission of the application to access the calendar application, that is, allowing access to a calendar is further classified into the following categories: allowing access to all calendars, and allowing access to only a calendar created by the application. Therefore, after detecting that the application has the native calendar access permission in S42, the electronic device needs to further determine the permission level of the application. When the permission level is allowing access to all calendars, the electronic device continues to execute subsequent S44-1. When the permission level is allowing access to only a calendar created by the application, the electronic device continues to execute S44-2.

The electronic device may preset specific levels corresponding to the calendar access permissions of the installed applications, and the setting method includes the following manners.

In a possible implementation, the electronic device may set, by default, that the permission levels of all applications are allowing access to all calendars, or the permission levels of all applications are allowing access to only a calendar created by the application, or permission levels of all system APPs are allowing access to all calendars and permission levels of third-party APPs are allowing access to only a calendar created by the application.

In another possible implementation, the user may set a permission level of each application to access the calendar application in Settings of the electronic device. For example, reference may be made to the foregoing four setting manners described in FIG. 2A(1) to FIG. 2F(4).

In another possible implementation, the electronic device may pop up prompt information that is used to request the calendar access permission, so that the user can manage a specific permission level of an application to access the calendar application by using the prompt information. For example, reference may be made to the foregoing three setting manners described in FIG. 3A(1) to FIG. 3C(4).

**S44-1. The electronic device allows the application to** access **all schedules in the calendar application.**

Specifically, when the electronic device detects, in S43, that the permission level of the application is to allow access to all calendars, the electronic device allows the application to access all the schedules in the calendar application.

For example, when the application requests to access the calendar application in S41, which specifically includes reading the calendar, in S44-1, the electronic device may return all schedules in the calendar to the application. For details, refer to the foregoing results of accessing all the calendars by the application C described in FIG. 3C(1) to FIG. 3C(4) and FIG. 3F(1) to FIG. 3F(4). When the application requests to access the calendar application in S41, which specifically includes creating/modifying/deleting a calendar, in S44-1, the electronic device allows the application to create a calendar or modify/delete all schedules in the calendar.

**S44-2. The electronic device only allows the application to access a schedule created by the application.**

Specifically, when the electronic device detects in S43 that the permission level of the application is not allowing access to all calendars, the electronic device only allows the application to access a schedule created by the application.

For example, when the application requests to access the calendar application in S41, which specifically includes reading the calendar, in S44-2, the electronic device returns, to the application, only the schedule created by the application in the calendar. For details, refer to a result described in FIG. 3I(4) that the application C accesses the schedule created by the application in the calendar. When the application requests to access the calendar application in S41, which specifically includes creating/modifying/deleting a calendar, in S44-2, the electronic device only allows the application to create a schedule in the calendar or modify/delete a schedule created by the application in the calendar.

It can be learned that the permission control method provided in this application is implemented by setting refined permission levels, so that each application can access the calendar application based on a corresponding permission level according to a user requirement, so as to avoid accessing all schedules in the calendar application without user authorization, including schedules created by another application in the calendar, thereby avoiding disclosure of privacy of the user.

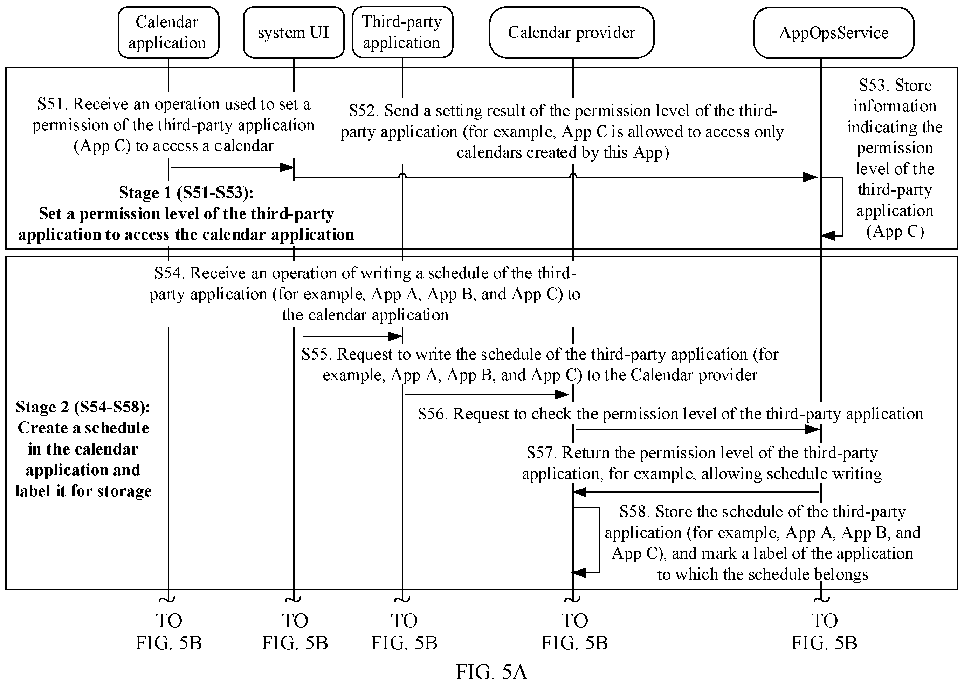

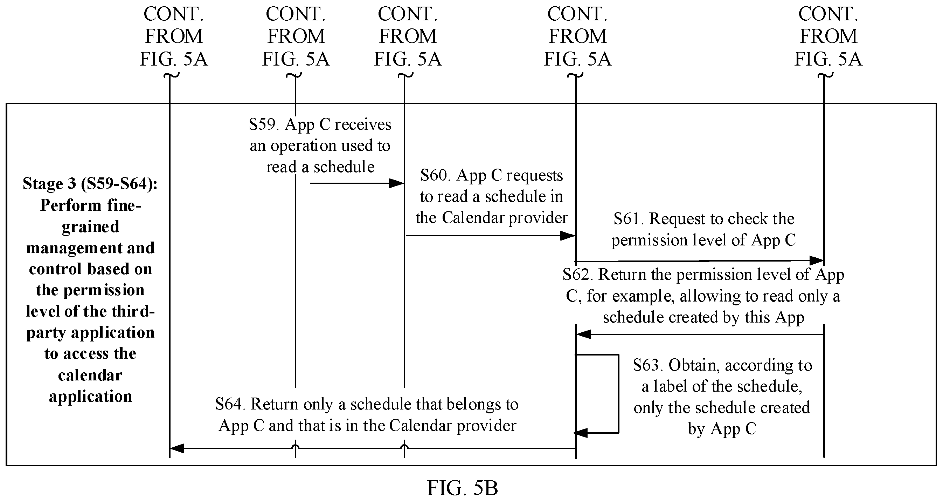

The following describes in detail, with reference to FIG. 5A and FIG. 5B, a specific implementation of the permission management method provided in this application. The specific implementation relates to a calendar application, a third-party application, a calendar provider (Calendar provider), and an application operation permission management service (Application OperationsService,AppOpsService).

For details about the calendar application and the third-party application, refer to the foregoing description at S41. Details are not described herein again.

The Calendar provider is a module included in a content provider in an application framework layer of the electronic device, is equivalent to a database that is responsible for storing calendar data (that is, schedules), and provides a data access manner, for example, a read manner and a write manner, where the write manner includes creating/deleting/modifying or the like. An application can access a schedule in the database by using the Calendar Provider API.

In particular, in this application, schedules stored in the Calendar provider are marked with labels of applications to which the schedules belong.

The AppOpsService is a service used to manage an operation permission of an application, is a function included in a native system of the electronic device, and may be used to manage a native calendar access permission of an application installed in the electronic device, that is, includes two permissions: prohibiting access and allowing access. The allowing access means allowing access to all calendars.

Specifically, in this application, the AppOpsService can also be used to fine-tune the permission level of each application to access the calendar application, including allowing access to all calendars and allowing access to only a calendar and a schedule created by the application.

Specific implementation of the permission management method shown in FIG. 5A and FIG. 5B specifically includes the following steps.

**Stage 1 (S51-S53):** Set a permission level of a third-party application to access the calendar application. In addition, a permission level of a system application to access the calendar application may also be set. Because the permission level of the third-party application to access the calendar application is strongly related to privacy security of the user, this application focuses on management and control of the calendar access permission of the third-party application.

**S51. A system UI of the electronic device receives an operation used to set a permission of the third-party application (application C) to access the calendar application.**

Specifically, that the system UI of the electronic device receives the operation used to set the permission of the third-party application to access the calendar application may be any one of the following:
(1) Set the calendar access permission of the third-party application in Settings. Specifically, for example, an operation on the option of accessing only a calendar created by the application in e in FIG. 2B is performed in the scenario described in FIG. 2A(1) to FIG. 2B. For another example, an operation of accessing only a calendar created by the application in e in FIG. 2D is performed in the scenario described in FIG. 2C(1) to FIG. 2D. For another example, an operation on the control 218A for immediate optimization in FIG. 2E(2) is performed in the scenario described in FIG. 2E(1) to FIG. 2E(4). For another example, an operation on the option of accessing only a calendar created by the application in FIG. 2F(4) is performed in the scenario described in FIG. 2F(1) to FIG. 2F(4).
(2) Set the calendar access permission of the third-party application in the application. Specifically, for example, when the third-party application is the application A, for an operation of setting the calendar access permission of the application A in the application, refer to the operation performed on the option of accessing only a calendar created by the application in FIG. 3A(4) in the foregoing scenario shown in FIG. 3A(1) to FIG. 3A(4). For another example, when the third-party application is the application B, for an operation of setting the calendar access permission of the application B in the application, refer to the operation performed on the option of accessing only a calendar created by the application in FIG. 3B(3) in the foregoing scenario shown in FIG. 3B(1) to FIG. 3B(4). For another example, when the third-party application is the application C, for an operation of setting the calendar access permission of the application C in the application, refer to the operation performed on the option of accessing only a calendar created by the application in FIG. 3C(3) in the foregoing scenario shown in FIG. 3C(1) to FIG. 3C(4). For different third-party applications, specific operations of setting calendar access permission levels of the applications are different. This application does not list all applications one by one.

**S52. The system UI of the electronic device sends a setting result of the permission level of the third-party application to the AppOpsService** (for example, the application C is allowed to access only the calendar created by the application).

Specifically, after receiving the operation used to set the permission of the third-party application to access the calendar application, the electronic device sends the setting result of the permission level of the corresponding third-party application to the AppOpsService according to the operation. The AppOpsService may refresh and store the permission level of each application to access the calendar application, so that when the third-party application subsequently accesses the calendar application, the AppOpsService may perform execution based on the latest permission level of the third-party application.

For example, the permission level of the application C is used as an example. In S51, the operation received by the system UI is changing the permission level of the application C to access the calendar from "Allow access to all calendars" to "Access only a calendar created by this App" shown in FIG. 3I(3). In this case, in S52, the permission level of the application C to access the calendar that is sent by the system UI to the AppOpsService is "Access only a calendar created by this App", and correspondingly the AppOpsService refreshes the previously stored permission level of the application C to access the calendar from "Allow access to all calendars" to "Access only a calendar created by this App".

**S53. The AppOpsService of the electronic device stores information indicating the permission level of the third-party application (application C).**

Specifically, after receiving the setting result of the permission level sent by the third-party application, the AppOpsService of the electronic device stores, in the AppOpsService, latest information used to indicate the permission level of the third-party application.

The information indicating the permission level of the third-party application includes: information indicating a permission level of the third-party application to read the calendar, and information indicating a permission level of the third-party application to create/modify/delete a calendar. Specifically, the information indicating the permission level of the third-party application to read the calendar, or create/modify/delete a calendar may be information indicating whether a fine switch is enabled. For example, 1 indicates that the fine switch is enabled, and 0 indicates that the fine switch is disabled. That the fine switch is enabled represents that the permission level of the third-party application to read the calendar is allowing access to all calendars, and that the fine switch is disabled represents that the permission level of the third-party application to read the calendar is allowing access to only a calendar created by the application.

**Stage 2 (S54-S58):** Create a schedule in the calendar application and label it for storage. Generally, the calendar application, the third-party application, another system application, and the like may create a schedule in the calendar application when having a corresponding permission. That the third-party application creates a schedule in the calendar application is merely used as an example herein, which should not constitute a limitation on this application.

**S54. The third-party application of the electronic device receives an operation of writing a schedule of the third-party application (for example, including the application A, the application B, and the application C) to the calendar application.**

Specifically, that the third-party application of the electronic device receives an operation of writing a schedule of the third-party application to the calendar application includes: For example, the foregoing operation that is used to subscribe to a calendar reminder in the application A described in FIG. 3A(3) may trigger the application A to request to write schedule information of the check-in reminder to the database of the calendar application, that is, the Calendar provider. For another example, the foregoing operation that is described in FIG. 3B(2) and that is used to reserve a live video in the application B may trigger the application B to request to write schedule information of reminding to watch the live video to the database of the calendar application, that is, the Calendar provider. For another example, the foregoing operation that is used to create a schedule in c of the application C and that is described in FIG. 3F(3) may trigger the application C to request to write schedule information of reminding to watch a live video to the database of the calendar application, that is, the Calendar provider.

**S55. The third-party application of the electronic device requests to write the schedule of the third-party application (for example, including the application A, the application B, and the application C) to the Calendar provider.**

Specifically, after receiving the operation of writing the schedule of the third-party application to the calendar application, the third-party application of the electronic device requests, to the Calendar provider according to the operation, to write the schedule of the third-party application to the Calendar provider.

**S56. The Calendar provider of the electronic device requests the AppOpsService to check the permission level of the third-party application.**

Specifically, after receiving the request sent by the third-party application for writing the schedule of the third-party application, the Calendar provider of the electronic device continues to request the AppOpsService to check the permission level of the application, to determine whether to allow the schedule of the third-party application to be written to the Calendar provider.

**S57. The AppOpsService of the electronic device returns the permission level of the third-party application, for example, allowing schedule writing, to the Calendar provider.**

Specifically, after receiving the request sent by the Calendar provider, the AppOpsService of the electronic device checks the permission of the third-party application, and returns a check result to the Calendar provider.

For example, if the permission level of the application A stored in the AppOpsService includes allowing creation/deletion/modification of a calendar, it is determined that the schedule (Check-in to receive a red envelope) of the application A is allowed to be written to the Calendar provider. For another example, if the permission level of the application B stored in the AppOpsService includes allowing creation/deletion/modification of a calendar, it is determined that the schedule (Live video reminder) of the application B is allowed to be written to the Calendar provider. For another example, if the permission of the calendar application stored in the AppOpsService includes allowing creation/deletion/modification of a calendar, it is determined that the schedule of the calendar application (Mother's birthday) is allowed to be written to the Calendar provider.

**S58. The Calendar provider of the electronic device stores the schedule of the third-party application (for example, including the application A, the application B, and the application C), and marks a label of the application to which the schedule belongs.**

Specifically, after receiving the information indicating that the calendar application is allowed to write the schedule returned by the AppOpsService, the Calendar provider of the electronic device stores the schedule corresponding to the operation of writing the schedule in S54 in the Calendar provider, and marks a label of the application for the schedule, that is, the application to which the schedule belongs is the calendar application.

It may be understood that, in stage 2, that the calendar application creates a schedule is merely used as an example for description. In addition, the electronic device may create a calendar in another manner. Details are not described herein again, and only brief description is provided.

For example, a schedule is created in the calendar application by using the application A, the application B, the application C, or another application. Specifically, after the application A creates a schedule in the calendar application, that is, subscribing to a calendar application reminder service described in FIG. 3A(1) to FIG. 3A(4), the application A creates a schedule in the calendar application to remind the user to check in. Specifically, after the application B creates a schedule in the calendar application, that is, reserving an interface described in FIG. 3B(1) to FIG. 3B(4), the application B creates a task of reminding the user to watch the program in the calendar application. Manners of creating a schedule in the calendar application by all applications are not listed one by one herein.

Refer to Table 1. Table 1 shows an example of relevant information of schedules stored in the Calendar provider according to this application.

**Table 1**

| Application (label) | Schedule record |
|---|---|
| Calendar application | Mother's birthday |
| Application A | Check-in to receive a red envelope |
| Application B | Live video reminder |
| Application C | Project meeting |

Table 1 shows merely an example of content included in the schedules stored in the Calendar provider. Optionally, the schedules stored in the Calendar provider may further include but are not limited to information such as a schedule location and a time, and a package name (pkgName) corresponding to the schedule. This is not limited in this embodiment of this application.

In addition, an execution sequence of the stage 1 and the stage 2 is not limited in this application. In a possible implementation, the stage 1 may further occur after the stage 2, or the stage 2 is synchronously executed in a process of executing the stage 1.

**Stage 3 (S59-S64):** Perform fine-grained management and control based on the permission level of the third-party application to access the calendar application. That the third-party application requests to read a calendar is merely used as an example for detailed description herein. Implementation of fine-grained management and control of the third-party application requesting to write a calendar is similar to implementation of fine-grained management and control of reading a calendar. Details are not described herein again.

**S59. The application C of the electronic device receives an operation used to read a schedule.**

Specifically, the operation that is received by the third-party application of the electronic device, for example, the application C and that is used to read a calendar includes but is not limited to the following:
(1) An operation used to trigger the electronic device to start the third-party application for the first time. Specifically, for some applications, when the application is run for the first time, the application requests to obtain corresponding permissions, including a permission to access a schedule.
(2) An operation used to enable a calendar reminder function provided in the third-party application. For example, an operation of subscribing to a calendar reminder in the application A described in FIG. 3A(1) to FIG. 3A(4) is performed, an operation of reserving a program described in FIG. 3B(1) to FIG. 3B(4) is performed, or the like. When the application is another type of application, the operation used to read a schedule may be in more other forms. Details are not described herein again.

**S60. The application C of the electronic device requests to read a schedule in the Calendar provider.**

Specifically, after receiving the operation used to read a calendar, the application C of the electronic device requests to read the schedule from the Calendar provider.

**S61. The Calendar provider of the electronic device requests the AppOpsService to check the permission level of the application C.**

Specifically, after receiving the request for reading a schedule sent by the application C, the Calendar provider of the electronic device continues to request the AppOpsService to check the permission level of the application C, to determine whether the application C is allowed to read the schedule in the Calendar provider and which schedules are allowed to be read.

**S62. The AppOpsService of the electronic device returns the permission level of the application C to the Calendar provider, for example, allowing to read only a schedule created by the application.**

Specifically, after receiving the request sent by the Calendar provider, the AppOpsService of the electronic device starts to check the permission of the third-party application, and returns a check result to the Calendar provider.

For example, with reference to the description in the foregoing stage 1 of setting the permission level of the third-party application to access the calendar application, in this case, the permission of the application C stored in the AppOpsService is, for example, allowing to read only a schedule created by the application. Therefore, the AppOpsService returns, to the Calendar provider, the permission level of the application C including information indicating that only a schedule created by the application is allowed to be read.

**S63. The Calendar provider of the electronic device obtains, according to a label of the schedule, the schedule created by the application C.**

Specifically, after receiving the information that is returned by the AppOpsService and that indicates that only a schedule created by the application is allowed to be read, the Calendar provider of the electronic device obtains, from the Calendar provider according to the label of the schedule, the schedule created by the application C.

**S64. The Calendar provider of the electronic device returns, to the application C, only a schedule that belongs to the application C and that is in the Calendar provider.**

Specifically, when the Calendar provider stores the schedule created by the application C, the Calendar provider returns only the schedule created by the application C in the calendar to the application C. If no schedule created by the application C is stored in the Calendar provider, another schedule is not returned. It may be specifically learned by comparing the interface of the application C shown in FIG. 3F(4) and that shown in FIG. 3I(4) that when the permission of the application C includes allowing to read all calendars, the application C may display the schedule information of the application A, the application B, and the calendar application included in FIG. 3F(4). When the permission of the application C is modified to allowing to read a calendar created by the application, the application C displays the interface in FIG. 3I(4), where the interface does not include the schedule information of the application A, the application B, and the calendar application, and includes only the schedule of the application C and Project Meeting.

It can be learned that the permission control method provided in this application is implemented by setting refined permission levels, so that each application can access the calendar application based on a corresponding permission level according to a user requirement, so as to avoid accessing all schedules in the calendar application without user authorization, including schedules created by another application in the calendar, thereby avoiding disclosure of privacy of the user.

The foregoing describes the UI embodiments and the method procedures. The following describes related apparatuses to which the permission management and control method provided in this application is applied, including a form of an electronic device, a software and hardware architecture, and the like.

The electronic device may be a portable terminal device equipped with iOS^{®}, Android^{®}, Microsoft^{®}, or another operating system, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device.

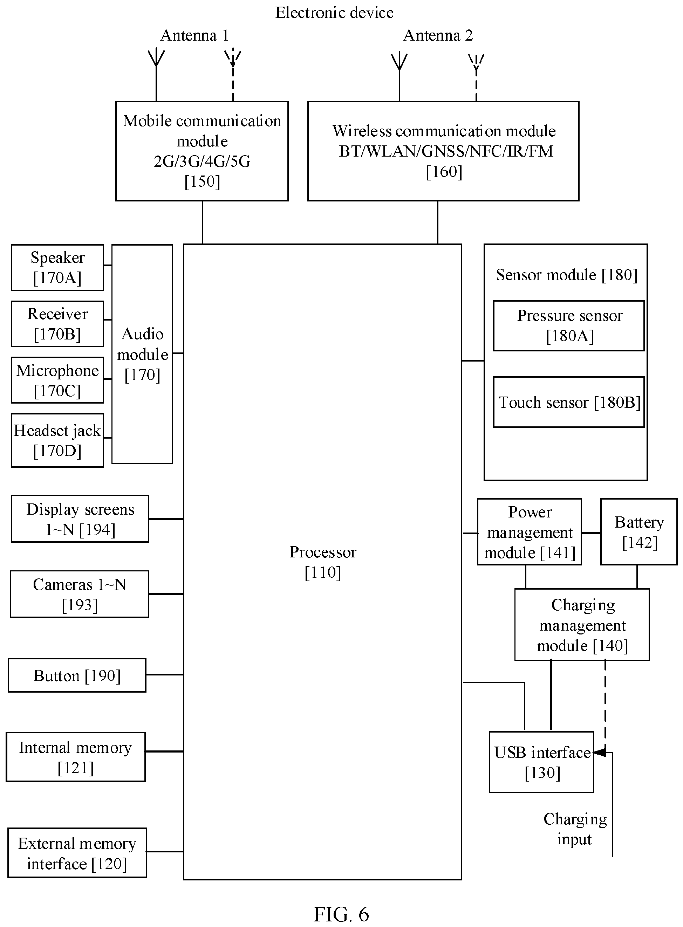

FIG. 6 is a schematic diagram of a hardware architecture of an electronic device.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a camera 193, a display screen 194, and the like. The sensor module 180 may include a pressure sensor 180A, a touch sensor 180B, an acceleration sensor 180C, and the like.

It may be understood that the structure illustrated in this embodiment of this application does not constitute a specific limitation on the electronic device. In some other embodiments of this application, the electronic device may include more or fewer components than those shown in the figure, or combine some components, or split some components, or have different component arrangements. The parts shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In this embodiment of this application, the processor 110 is configured to control a corresponding software or hardware module to execute the foregoing methods described in FIG. 4 and FIG. 5A and FIG. 5B. For details, reference may be made to related descriptions of FIG. 4 and FIG. 5A and FIG. 5B in the foregoing. Details are not described herein again.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that complies with USB standard specifications, and may be specifically a Mini USB interface, a Micro USB interface, a USB Type C interface, or the like. The USB interface 130 may be configured to connect to the charger to charge the electronic device.

In this application, the USB interface 130 may also be configured to transmit data between the electronic device and a peripheral device, for example, may be configured to connect to a headset and play audio by using the headset.

It may be understood that the interface connection relationship between the modules illustrated in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive wireless charging input by using a wireless charging coil of the electronic device. When charging the battery 142, the charging management module 140 may further supply power to the electronic device through the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display screen 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a wireless communication solution applied to the electronic device, including 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communications module 160 may provide a solution to wireless communication such as a wireless local area network (wireless local area networks, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), near field communication (near field communication, NFC), or infrared (infrared, IR) applied to the electronic device. The wireless communication module 160 may be one or more devices integrating at least one communication processing module. The wireless communication module 160 receives electromagnetic waves by using the antenna 2, performs frequency demodulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In some embodiments, the antenna 1 and the mobile communication module 150 in the electronic device are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quas-zenith satellite system, QZSS), and/or a satellite based augmentation system (satellite based augmentation systems, SBAS).

The electronic device implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs, which execute program instructions to generate or change display information.

The display screen 194 is configured to display an image, a video, and the like. The display screen 194 includes a display panel. The display panel may be a liquid crystal display (liquid crystal display, LCD). The display panel may alternatively be made from an organic light-emitting diode (organic light-emitting diode, OLED), an active-matrix organic light emitting diode (active-matrix organic light emitting diode, AMOLED), a flexible light-emitting diode (flex light-emitting diode, FLED), a miniled, a microLed, a micro-oled, a quantum dot light emitting diode (quantum dot light emitting diodes, QLED), or the like. In some embodiments, the electronic device may include one or N display screens 194, where N is a positive integer greater than 1.

In this embodiment of this application, the electronic device may display, by using the display screen 194, the user interfaces shown in FIG. 1, FIG. 2A(1) to FIG. 2F(4), and FIG. 3A(1) to FIG. 3H(2) that are provided in the foregoing UI embodiments. Details are not described herein.

The electronic device may implement a shooting function by using the ISP, the camera 193, the video codec, the GPU, the display 194, the application processor, and the like.

The ISP is configured to process data fed back by the camera 193. For example, during shooting, a shutter is opened, and light is transferred to a photosensitive element of the camera through a lens. An optical signal is converted into an electrical signal. The photosensitive element of the camera transfers the electrical signal to the ISP for processing, to convert the electrical signal into an image visible to naked eyes. The ISP may further perform algorithm optimization on noise and brightness of the image. The ISP may further optimize parameters such as exposure and a color temperature of a shooting scenario. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device performs frequency selection, the digital signal processor is configured to perform Fourier transform or the like on frequency energy.

The video codec is configured to compress or decompress a digital video. The electronic device can support one or more video codecs. In this way, the electronic device can play or record videos in a plurality of encoding formats, for example, moving picture experts group (moving picture experts group, MPEG) 1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device, for example, image recognition, facial recognition, speech recognition, and text understanding, may be implemented by using the NPU.

The internal storage 121 may include one or more random access memories (random access memory, RAM) and one or more non-volatile memories (non-volatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, where for example, a fifth generation DDR SDRAM is usually referred to as a DDR5 SDRAM), and the like.

The non-volatile memory may include a magnetic disk storage component and a flash memory (flash memory).

The flash memory may include NOR FLASH, NAND FLASH, 3D NAND FLASH, and the like based on an operating principle. The flash memory may include a single-level cell (single-level cell, SLC), a multi-level cell (multi-level cell, MLC), a triple-level cell (triple-level cell, TLC), a quad-level cell (quad-level cell, QLC), and the like based on a quantity of levels of a cell. The flash memory may include a universal flash storage (English: universal flash storage, UFS), an embedded multi media card (embedded multi media Card, eMMC), and the like based on a storage specification.

The processor 110 may directly perform reading from or writing into the random access memory. The random access memory may be configured to store an executable program (for example, machine instructions) of an operating system or another running program, and may be further configured to store data of a user and data of an application, and the like.

The non-volatile memory may also store the executable program, the data of the user, and the data of the application, and the like, which may be loaded into the random access memory in advance for directly reading and writing by the processor 110.

The external memory interface 120 may be configured to be connected to an external non-volatile memory, to expand a storage capability of the electronic device. The external non-volatile memory communicates with the processor 110 by using the external memory interface 120, to implement a data storage function. For example, files such as music and a video are stored in the external non-volatile memory.

In this embodiment of this application, the foregoing memory may be configured to store a schedule stored in the Calendar Provider. For details, refer to the foregoing description of Table 1. Details are not described herein.

The electronic device may implement an audio function by using the audio module 170, the speaker 170A, the receiver 170B, the microphone 170C, the headset jack 170D, the application processor, and the like. For example, music playback or audio recording is implemented.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device may be configured to listen to music or answer a call in a hands-free mode by using the speaker 170A. In this embodiment of this application, the electronic device may choose, according to an operation of an audio output device selected by the user, to use the speaker 170A to output audio. In this scenario, if the electronic device sets the volume of the speaker to a high volume range, the processor 110 controls a corresponding software or hardware module to execute the foregoing method procedure, so that the speaker 170A outputs loud audio, and the user can hear audio content clearly.

The receiver 170B, also referred to as an "earpiece", is configured to convert an audio electrical signal into a sound signal. When the electronic device answers a call or receives a voice message, the receiver 170B may be placed close to a human ear to receive a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device. In some other embodiments, two microphones 170C may be disposed in the electronic device, to implement a noise reduction function in addition to sound signal collection. In some other embodiments, three, four, or more microphones 170C may be alternatively disposed in the electronic device, to implement sound signal collection and noise reduction, and further identify a sound source and implement a directional recording function and the like.

The headset jack 170D is configured to be connected to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device determines intensity of pressure based on a change of the capacitance. When a touch operation is performed on the display screen 194, the electronic device detects strength of the touch operation by using the pressure sensor 180A. The electronic device may also calculate a touch position based on a detected signal of the pressure sensor 180A. In some embodiments, touch operations acting on a same touch position but with different touch operation intensities may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The touch sensor 180B is also referred to as a "touch panel". The touch sensor 180B may be disposed on the display screen 194, and the touch sensor 180B and the display screen 194 constitute a touch screen, which is also referred to as a "touch control screen". The touch sensor 180B is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180B may be alternatively disposed on a surface of the electronic device, and is located at a different position from the display screen 194.

In this application, the electronic device may detect, by using the pressure sensor 180A and the touch sensor 180B, an operation that is used to manage a permission level of an application to access the calendar application, and is configured to receive an operation that triggers the application to perform reading from the calendar or writing into the calendar.

In this embodiment of this application, the electronic device may further determine a motion posture of the electronic device based on acceleration on the X, Y, and Z axes that is detected on the acceleration sensor 180C, for example, whether the user lifts or picks up the electronic device.

The button 190 includes a power button, a volume button, or the like. The button 190 may be a mechanical button, or may be a touch button. The electronic device may receive button input, and generate button signal input related to user settings and function control of the electronic device.

A software system of the electronic device may use a layered architecture, an event-driven architecture, a microkernel architecture, a microservice architecture, or a cloud architecture. In this embodiment of this application, an Android system with the layered architecture is used as an example to describe a software structure of the electronic device.

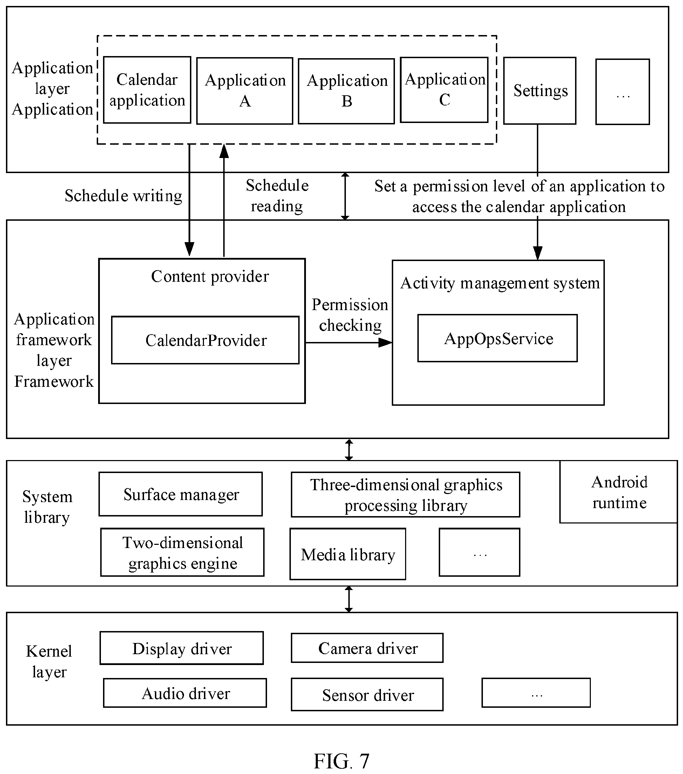

FIG. 7 is a block diagram of a software structure of an electronic device according to an embodiment of this application.

In a layered architecture, software is divided into several layers, and each layer has a clear role and task. The layers communicate with each other through software interfaces. In some embodiments, the Android system is divided into four layers: an application layer, an application framework layer, an Android runtime (Android runtime) and system library, and a kernel layer from top to bottom.

The application layer may include a series of application packages.

As shown in FIG. 7, the application package may include an application program such as a calendar application, an application A, an application B, an application C, and Settings.

The application framework layer provides an application programming interface (application programming interface, API) and a programming framework for an application at the application layer. The application framework layer includes some predefined functions.

The calendar application may be used to create a schedule. The application A, the application B, and the application C may create schedules by using the calendar application. Settings can be used to provide options for setting the level of permission of each application to access the calendar application.

As shown in FIG. 7, the application framework layer may include a content provider, an activity manager service (Activity manager service, AMS), and some window managers that are not shown, such as a view system, a phone manager, a resource manager, a notification manager, and the like.

The content provider is configured to store and obtain data, and enable the data to be accessible to an application. The data may include videos, images, audio, calls that are made and received, browsing history and bookmarks, a phone book, and the like.

In particular, the content provider includes a Calendar Provider, where the Calendar Provider stores a schedule created by the calendar or created by another application in the calendar.

The AMS is one of the important services in the system service of the electronic device. It is mainly responsible for starting, switching, scheduling of various components in the system and management and scheduling of application processes. Its responsibilities are similar to the process management and scheduling module in the operating system.

In particular, the AMS includes AppOpsService. AppOpsService is a service used to manage an operation permission of an application, is a function included in a native system of the electronic device, and may be used to manage a native calendar access permission of an application installed in the electronic device, that is, includes two permissions: prohibiting access and allowing access. The allowing access means allowing access to all calendars.

The window manager is configured to manage a window program. The window manager may obtain a size of a display screen, determine whether a status bar exists, lock a screen, take a screenshot, and the like.

The view system includes visual controls such as a text display control and a picture display control. The view system may be configured to build an application. A display interface may include one or more views. For example, a display interface including an SMS message notification icon may include a view for displaying a text and a view for displaying a picture.

The phone manager is configured to provide a communication function of the electronic device, for example, call status management (including answering, hanging up, and the like).

The resource manager provides various resources for an application, such as a localized string, an icon, a picture, a layout file, and a video file.

The notification manager enables the application to display notification information in a status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted in the status bar, an alert sound is made, the electronic device vibrates, or an indicator light blinks.

The Android runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D (2D) graphics engine (for example, an SGL).

The surface manager is configured to manage a display subsystem, and provide 2D and 3D layer fusion for a plurality of applications.

The media library supports playing and recording in a plurality of common audio and video formats, a still image file, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display driver, a camera driver, an audio driver, and a sensor driver.

It should be understood that the steps of the foregoing method embodiment provided in this application may be implemented by using a hardware integrated logic circuit in the processor or implemented by using instructions in a software form. The steps of the method disclosed with reference to the embodiments of this application may be directly performed by a hardware processor, or by a combination of hardware in the processor and a software module.

This application further provides an electronic device, and the electronic device may include a memory and a processor. The memory may be configured to store a computer program, and the processor may be configured to invoke the computer program in the memory to cause the electronic device to perform the method in any one of the foregoing embodiments.

This application further provides a chip system. The chip system includes at least one processor configured to implement the functions involved in the method performed by the electronic device in any one of the foregoing embodiments.

In a possible design, the chip system further includes a memory. The memory is configured to store program instructions and data. The memory is located inside the processor or outside the processor.

The chip system may include a chip, or may include a chip and another discrete device.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may also include one or more memories. The memory may be integrated with the processor, or may be separated from the processor. This is not limited in embodiments of this application. For example, the memory may be a non-transitory memory such as a read-only memory ROM, and the memory and the processor may be integrated on a same chip, or may be respectively arranged on different chips. A type of the memory and a manner of disposing the memory and the processor are not limited in embodiments of this application.

For example, the chip system may be a field programmable gate array (field programmable gate array, FPGA), an application specific integrated circuit (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

This application further provides a computer program product, and the computer program product includes a computer program (which may also be referred to as code or an instruction). When the computer program is run, a computer is caused to perform the method performed by the electronic device in any one of the foregoing embodiments.

This application further provides a computer-readable storage medium. The computer-readable storage medium stores a computer program (also referred to as code or an instruction). When the computer program is run, a computer is caused to perform the method performed by the electronic device in any one of the foregoing embodiments.

The various implementations of this application may be arbitrarily combined to achieve different technical effects.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or magnetic tape), an optical medium (for example, a DVD), a semiconductor medium (for example, a solid state disk Solid State Disk), or the like.

Persons of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

In conclusion, the foregoing descriptions are only embodiments of the technical solutions of the present invention, and are not intended to limit the protection scope of the present invention. Any modifications, equivalent replacements, improvements, or the like made based on the disclosure of the present invention shall fall within the protection scope of the present invention.

## Claims

1. A permission management method, wherein the method comprises:
receiving a first operation when a first interface is displayed; and
displaying a first window on the first interface in response to the first operation, wherein the first window comprises:
a name of a first application;
a first option, wherein when a second operation on the first option is received, a permission of the first application to access a calendar application is set to a first permission, and the first permission is accessing all schedules of the calendar application; and
a second option, wherein when a third operation on the second option is received, the permission of the first application to access the calendar application is set to a second permission, and the second permission is accessing only a schedule created by the first application,
wherein the method is applied to an electronic device comprising a calendar provider, and the method comprises: after receiving the third operation on the second option, storing a first schedule of the first application in the calendar provider, and marking the first schedule as belonging to the first application.

2. The method according to claim 1, wherein the first interface comprises an interface of a settings application or an interface of the first application.

3. The method according to claim 1 or 2, wherein the first window further comprises access type information, and the access type information comprises at least one of:
schedule reading, or
schedule creation or deletion or modification.

4. The method according to any one of claims 1 to 3, wherein the first application is a shopping application, and the first interface is an interface of the first application; and
the method further comprises:
receiving the second operation performed on the first option;
in response to the second operation, setting the permission of the first application to access the calendar application to the first permission; and
displaying a second interface of the first application, wherein a commodity comprised in the second interface is different from a commodity comprised in the first interface.

5. The method according to claim 4, wherein a commodity comprised in the second interface is related to a schedule in the calendar application.

6. The method according to any one of claims 1 to 3, wherein the first application is a schedule management application, and the method further comprises:
receiving the second operation on the first option, and setting, in response to the second operation, the permission of the first application to access the calendar application to the first permission; and
displaying a third interface of the first application, wherein the third interface comprises all schedules in the calendar application.

7. The method according to any one of claims 1 to 3, or 6 , wherein the method further comprises:
receiving the third operation on the second option, and setting the permission of the first application to access the calendar application to the second permission in response to the third operation; and
displaying a fourth interface of the first application, wherein the fourth interface comprises only the schedule created by the first application.

8. The method according to claim 3, wherein when the first application is an application that only read the calendar (316), the first window does not comprise the second option.

9. The method according to any one of claims 1 to 8, wherein the first window further comprises a third option, and when a fifth operation on the third option is received, the permission of the first application to access the calendar application is set to a third permission, and the third permission is prohibiting access to a schedule of the calendar application.

10. The method according to claim 6, wherein all the schedules in the calendar application comprise a schedule of a second application, the method further comprises:
when detecting a privacy risk of setting the permission of the first application to the first permission, displaying prompt information (111A, 111B, 112A, 112B, 113A, 113B, 219A-C, 313A, 313B, 315A, 315B, 319A, 319B), wherein the prompt information (111A, 111B, 112A, 112B, 113A, 113B, 219A-C, 313A, 313B, 315A, 315B, 319A, 319B) is used to prompt a user to adjust a permission of the first application;
receiving a sixth operation, and setting the permission of the first application to access the calendar application to the second permission in response to the sixth operation; and
displaying the interface of the first application, wherein the interface of the first application does not comprise the schedule of the second application.

11. The method according to any one of claims 1 to 10, wherein the first application is a third-party application, and the first operation comprises an operation acting on a calendar reminder control.

12. The method according to any one of claims 1 to 11, wherein the method is applied to an electronic device comprising an application operation permission management service (AppOpsService), and the method further comprises:
receiving the third operation on the second option; and
in response to the third operation, storing, in the AppOpsService, the permission of the first application to access the calendar application as the second permission.

13. An electronic device, wherein the electronic device comprises one or more memories and one or more processors (110); the memory (121) is coupled to the one or more processors (110); the memory (121) is configured to store computer program code; the computer program code comprises computer instructions; and the one or more processors (110) invoke the computer instructions to enable the electronic device to execute the method according to any one of claims 1 to 12.

14. A computer-readable storage medium, comprising instructions, wherein when the instructions run on an electronic device, the electronic device is enabled to perform the method according to any one of claims 1 to 12.

## Patentansprüche

1. Ein Berechtigungsverwaltungsverfahren, wobei das Verfahren umfasst:
Empfangen einer ersten Operation, wenn eine erste Schnittstelle angezeigt wird; und
Anzeigen eines ersten Fensters auf der ersten Schnittstelle in Reaktion auf die erste Operation, wobei das erste Fenster umfasst:
einen Namen einer ersten Anwendung;
eine erste Option, wobei, wenn eine zweite Operation auf die erste Option empfangen wird, eine Berechtigung der ersten Anwendung zum Zugriff auf eine Kalenderanwendung auf eine erste Berechtigung gesetzt wird, und die erste Berechtigung den Zugriff auf alle Termine der Kalenderanwendung umfasst; und
eine zweite Option, wobei, wenn eine dritte Operation auf die zweite Option empfangen wird, die Berechtigung der ersten Anwendung zum Zugriff auf die Kalenderanwendung auf eine zweite Berechtigung gesetzt wird, und die zweite Berechtigung nur den Zugriff auf einen von der ersten Anwendung erstellten Termin umfasst,
wobei das Verfahren auf eine elektronische Vorrichtung angewendet wird, die einen Kalenderanbieter umfasst, und das Verfahren umfasst: nach Empfang der dritten Operation auf die zweite Option, Speichern eines ersten Termins der ersten Anwendung in dem Kalenderanbieter und Markieren des ersten Termins als zu der ersten Anwendung gehörig.

2. Das Verfahren nach Anspruch 1, wobei die erste Schnittstelle eine Schnittstelle einer Einstellungsanwendung oder eine Schnittstelle der ersten Anwendung umfasst.

3. Das Verfahren nach Anspruch 1 oder 2, wobei das erste Fenster ferner Zugriffstypinformationen umfasst und die Zugriffstypinformationen mindestens eines der folgenden umfassen:
Terminlesen, oder
Terminerstellung oder -löschung oder -änderung.

4. Das Verfahren nach einem der Ansprüche 1 bis 3, wobei die erste Anwendung eine Einkaufsanwendung ist und die erste Schnittstelle eine Schnittstelle der ersten Anwendung ist; und
das Verfahren ferner umfasst:
Empfangen der zweiten Operation, die auf die erste Option ausgeführt wird;
in Reaktion auf die zweite Operation, Setzen der Berechtigung der ersten Anwendung zum Zugriff auf die Kalenderanwendung auf die erste Berechtigung; und
Anzeigen einer zweiten Schnittstelle der ersten Anwendung, wobei ein in der zweiten Schnittstelle enthaltenes Produkt von einem in der ersten Schnittstelle enthaltenen Produkt verschieden ist.

5. Das Verfahren nach Anspruch 4, wobei ein in der zweiten Schnittstelle enthaltenes Produkt mit einem Termin in der Kalenderanwendung in Beziehung steht.

6. Das Verfahren nach einem der Ansprüche 1 bis 3, wobei die erste Anwendung eine Terminverwaltungsanwendung ist und das Verfahren ferner umfasst:
Empfangen der zweiten Operation auf der ersten Option und Einstellen der Berechtigung der ersten Anwendung für den Zugriff auf die Kalenderanwendung auf die erste Berechtigung als Reaktion auf die zweite Operation; und
Anzeigen einer dritten Schnittstelle der ersten Anwendung, wobei die dritte Schnittstelle alle Termine in der Kalenderanwendung umfasst.

7. Verfahren nach einem der Ansprüche 1 bis 3 oder 6, wobei das Verfahren ferner umfasst:
Empfangen der dritten Operation auf der zweiten Option und Einstellen der Berechtigung der ersten Anwendung für den Zugriff auf die Kalenderanwendung auf die zweite Berechtigung als Reaktion auf die dritte Operation; und
Anzeigen einer vierten Schnittstelle der ersten Anwendung, wobei die vierte Schnittstelle nur den von der ersten Anwendung erstellten Termin umfasst.

8. Verfahren nach Anspruch 3, wobei, wenn die erste Anwendung eine Anwendung ist, die nur den Kalender (316) liest, das erste Fenster die zweite Option nicht umfasst.

9. Verfahren nach einem der Ansprüche 1 bis 8, wobei das erste Fenster ferner eine dritte Option umfasst, und wenn eine fünfte Operation auf der dritten Option empfangen wird, die Berechtigung der ersten Anwendung für den Zugriff auf die Kalenderanwendung auf eine dritte Berechtigung eingestellt wird, und die dritte Berechtigung den Zugriff auf einen Zeitplan der Kalenderanwendung untersagt.

10. Verfahren nach Anspruch 6, wobei alle Termine in der Kalenderanwendung einen Termin einer zweiten Anwendung umfassen, wobei das Verfahren ferner umfasst:
beim Erkennen eines Datenschutzrisikos beim Einstellen der Berechtigung der ersten Anwendung auf die erste Berechtigung, Anzeigen von Eingabeaufforderungsinformationen (111A, 111B, 112A, 112B, 113A, 113B, 219A-C, 313A, 313B, 315A, 315B, 319A, 319B), wobei die Eingabeaufforderungsinformationen (111A, 111B, 112A, 112B, 113A, 113B, 219A-C, 313A, 313B, 315A, 315B, 319A, 319B) dazu verwendet werden, einen Benutzer aufzufordern, eine Berechtigung der ersten Anwendung anzupassen;
Empfangen einer sechsten Operation und Einstellen der Berechtigung der ersten Anwendung für den Zugriff auf die Kalenderanwendung auf die zweite Berechtigung als Reaktion auf die sechste Operation; und
Anzeigen der Schnittstelle der ersten Anwendung, wobei die Schnittstelle der ersten Anwendung den Termin der zweiten Anwendung nicht umfasst.

11. Verfahren nach einem der Ansprüche 1 bis 10, wobei die erste Anwendung eine Drittanbieter-Anwendung ist und die erste Operation eine Operation umfasst, die auf ein Kalender-Erinnerungssteuerelement einwirkt.

12. Verfahren nach einem der Ansprüche 1 bis 11, wobei das Verfahren auf eine elektronische Vorrichtung angewendet wird, die einen Dienst zur Verwaltung von Anwendungsoperationsberechtigungen (AppOpsService) umfasst, und das Verfahren ferner umfasst:
Empfang des dritten Vorgangs für die zweite Option; und
als Reaktion auf den dritten Vorgang, Speichern der Berechtigung der ersten Anwendung für den Zugriff auf die Kalenderanwendung als zweite Berechtigung im AppOpsService.

13. Elektronische Vorrichtung, wobei die elektronische Vorrichtung einen oder mehrere Speicher und einen oder mehrere Prozessoren (110) umfasst; wobei der Speicher (121) mit dem einen oder den mehreren Prozessoren (110) gekoppelt ist; wobei der Speicher (121) dazu konfiguriert ist, Computerprogrammcode zu speichern; wobei der Computerprogrammcode Computeranweisungen umfasst; und wobei der eine oder die mehreren Prozessoren (110) die Computeranweisungen aufrufen, um die elektronische Vorrichtung dazu zu befähigen, das Verfahren nach einem der Ansprüche 1 bis 12 auszuführen.

14. Computerlesbares Speichermedium, umfassend Anweisungen, wobei die Anweisungen, wenn sie auf einer elektronischen Vorrichtung ausgeführt werden, die elektronische Vorrichtung dazu befähigen, das Verfahren nach einem der Ansprüche 1 bis 12 durchzuführen.

## Revendications

1. Procédé de gestion d'autorisations, dans lequel le procédé comprend :
la réception d'une première opération lorsqu'une première interface est affichée ; et
l'affichage d'une première fenêtre sur la première interface en réponse à la première opération, dans lequel la première fenêtre comprend :
un nom d'une première application ;
une première option, dans lequel lorsqu'une deuxième opération sur la première option est reçue, une autorisation de la première application à accéder à une application de calendrier est définie sur une première autorisation, et la première autorisation est l'accès à tous les événements de l'application de calendrier ; et
une deuxième option, dans lequel lorsqu'une troisième opération sur la deuxième option est reçue, l'autorisation de la première application à accéder à l'application de calendrier est définie sur une deuxième autorisation, et la deuxième autorisation est l'accès uniquement à un événement créé par la première application,
dans lequel le procédé est appliqué à un dispositif électronique comprenant un fournisseur de calendrier, et le procédé comprend : après avoir reçu la troisième opération sur la deuxième option, le stockage d'un premier événement de la première application dans le fournisseur de calendrier, et le marquage du premier événement comme appartenant à la première application.

2. Procédé selon la revendication 1, dans lequel la première interface comprend une interface d'une application de paramètres ou une interface de la première application.

3. Procédé selon la revendication 1 ou 2, dans lequel la première fenêtre comprend en outre des informations de type d'accès, et les informations de type d'accès comprennent au moins un parmi :
la lecture d'événement, ou
la création, la suppression ou la modification d'événement.

4. Procédé selon l'une quelconque des revendications 1 à 3, dans lequel la première application est une application d'achat, et la première interface est une interface de la première application ; et
le procédé comprend en outre :
la réception de la deuxième opération effectuée sur la première option ;
en réponse à la deuxième opération, la définition de l'autorisation de la première application à accéder à l'application de calendrier sur la première autorisation ; et
l'affichage d'une deuxième interface de la première application, dans lequel un produit compris dans la deuxième interface est différent d'un produit compris dans la première interface.

5. Procédé selon la revendication 4, dans lequel un produit compris dans la deuxième interface est lié à un événement dans l'application de calendrier.

6. Procédé selon l'une quelconque des revendications 1 à 3, dans lequel la première application est une application de gestion d'événements, et le procédé comprend en outre :
recevoir la seconde opération sur la première option, et définir, en réponse à la seconde opération, l'autorisation de la première application à accéder à l'application de calendrier sur la première autorisation ; et
afficher une troisième interface de la première application, dans laquelle la troisième interface comprend tous les événements dans l'application de calendrier.

7. Procédé selon l'une quelconque des revendications 1 à 3, ou 6, dans lequel le procédé comprend en outre :
recevoir la troisième opération sur la seconde option, et définir l'autorisation de la première application à accéder à l'application de calendrier sur la seconde autorisation en réponse à la troisième opération ; et
afficher une quatrième interface de la première application, dans laquelle la quatrième interface comprend uniquement l'événement créé par la première application.

8. Procédé selon la revendication 3, dans lequel, lorsque la première application est une application qui lit uniquement le calendrier (316), la première fenêtre ne comprend pas la seconde option.

9. Procédé selon l'une quelconque des revendications 1 à 8, dans lequel la première fenêtre comprend en outre une troisième option, et lorsqu'une cinquième opération sur la troisième option est reçue, l'autorisation de la première application à accéder à l'application de calendrier est définie sur une troisième autorisation, et la troisième autorisation interdit l'accès à un événement de l'application de calendrier.

10. Procédé selon la revendication 6, dans lequel tous les événements dans l'application de calendrier comprennent un événement d'une seconde application, le procédé comprenant en outre :
lors de la détection d'un risque de confidentialité lié à la définition de l'autorisation de la première application sur la première autorisation, afficher des informations d'invite (111A, 111B, 112A, 112B, 113A, 113B, 219A-C, 313A, 313B, 315A, 315B, 319A, 319B), dans lesquelles les informations d'invite (111A, 111B, 112A, 112B, 113A, 113B, 219A-C, 313A, 313B, 315A, 315B, 319A, 319B) sont utilisées pour inviter un utilisateur à ajuster une autorisation de la première application ;
recevoir une sixième opération, et définir l'autorisation de la première application à accéder à l'application de calendrier sur la seconde autorisation en réponse à la sixième opération ; et
afficher l'interface de la première application, dans laquelle l'interface de la première application ne comprend pas l'événement de la seconde application.

11. Procédé selon l'une quelconque des revendications 1 à 10, dans lequel la première application est une application tierce, et la première opération comprend une opération agissant sur une commande de rappel de calendrier.

12. Procédé selon l'une quelconque des revendications 1 à 11, dans lequel le procédé est appliqué à un dispositif électronique comprenant un service de gestion des autorisations d'opération d'application (AppOpsService), et le procédé comprend en outre :
réception de la troisième opération sur la deuxième option ; et
en réponse à la troisième opération, stockage, dans l'AppOpsService, de l'autorisation de la première application à accéder à l'application de calendrier en tant que deuxième autorisation.

13. Dispositif électronique, dans lequel le dispositif électronique comprend une ou plusieurs mémoires et un ou plusieurs processeurs (110) ; la mémoire (121) est couplée à un ou plusieurs processeurs (110) ; la mémoire (121) est configurée pour stocker un code de programme informatique ; le code de programme informatique comprend des instructions informatiques ; et les un ou plusieurs processeurs (110) invoquent les instructions informatiques pour permettre au dispositif électronique d'exécuter le procédé selon l'une quelconque des revendications 1 à 12.

14. Support de stockage lisible par ordinateur, comprenant des instructions, dans lequel lorsque les instructions sont exécutées sur un dispositif électronique, le dispositif électronique est autorisé à effectuer le procédé selon l'une quelconque des revendications 1 à 12.
